# EUROPÄISCHE PATENTSCHRIFT

(11) **EP 3 374 225 B1**
(45) Veröffentlichungstag und Bekanntmachung des Hinweises auf die Patenterteilung: **27.05.2020**
(21) Anmeldenummer: 16787394.2
(22) Anmeldetag: 21.10.2016
(51) Int. Cl.: B60K 35/00, B60K 37/06, G06F 3/01, G06K 9/00, B60W 40/08, G02B 27/01

(54) **VORRICHTUNG UND VERFAHREN ZUM STEUERN EINER ANZEIGEEINRICHTUNG IN EINEM KRAFTFAHRZEUG**
DEVICE AND METHOD FOR CONTROLLING A DISPLAY DEVICE IN A MOTOR VEHICLE
DISPOSITIF ET PROCÉDÉ POUR COMMANDER UN DISPOSITIF D'AFFICHAGE DANS UN VÉHICULE À MOTEUR

(30) Priorität: 13.11.2015 DE 102015222388
(43) Veröffentlichungstag der Anmeldung: 19.09.2018
(73) Patentinhaber: Bayerische Motoren Werke Aktiengesellschaft, 80809 München (DE)
(72) Erfinder: LIEBAU, Claudia, 84028 Landshut (DE); LIEBAU, Daniel, 84034 Landshut (DE)
(86) Internationale Anmeldenummer: PCT/EP2016/075345
(87) Internationale Veröffentlichungsnummer: WO 2017/080788

(56) Entgegenhaltungen:
- EP-A2- 2 515 526
- DE-A1-102011 114 074
- US-A1- 2013 235 058

## Beschreibung

Die Erfindung betrifft eine Vorrichtung und ein Verfahren zum Steuern einer Anzeigeeinrichtung in einem Kraftfahrzeug.

Die US 2005/0030322 A, die US 2005/0229200 A1, die US 2009/0079765 A1 und die US 2010/0103197 A1 offenbaren Vorrichtungen und Verfahren zum Ändern einer Anzeigegröße eines auf einer Anzeigeeinrichtung dargestellten Objekts, zum Anpassen eines Anzeigeinhalts und einer Größe dargestellter Informationen, zur Veränderung der Größe eines dargestellter Bildschirminhalts in Abhängigkeit einer Entfernung eines Betrachters zu der Anzeigeeinrichtung oder zum abstandsabhängigen Anpassen einer Zeichensatzgröße auf einer Anzeigeeinrichtung offen, wobei ein Betrachter Zeichensatzgrößen für verschiedene Abstände von einer Anzeigeeinrichtung vorgibt.

In der EP 2 515 526 A2 ist eine Anzeigevorrichtung mit einer Bilderfassung und -analyse zum Erkennen eines Gesichts eines Betrachters beschrieben, wobei anhand einer Gesichtsgröße eine Abschätzung eines Abstands zwischen dem Betrachter und der Anzeigevorrichtung vorgenommen wird und in Abhängigkeit dieses Abstands eine Größe eines Zeichensatzes automatisch angepasst wird, benutzerspezifische Einstellungen vorgenommen werden und/oder eine Ergonomieanalyse durchgeführt wird.

Die US 2013/0278496 A1 offenbart eine Vorrichtung und ein Verfahren zur Auswahl eines Benutzerinterfaces bzw. dessen Detailierungsgrad an dargestellter Information und deren Anzeigegröße in Abhängigkeit einer Entfernung eines Betrachters zu einer das Benutzerinterface darstellenden Anzeigeeinrichtung.

Aus der DE 10 2004 057 013 A geht eine Vorrichtung und ein Verfahren zum Verarbeiten und zum Anzeigen eines Videosignals an einer Anzeigeeinrichtung hervor, wobei mittels einer Abstandsdetektionseinrichtung ein vorgegebener Bereich vor der Anzeigeeinrichtung auf vorhandene Objekte, wie bspw. einen Betrachter, überwacht wird und ein Abstand solcher Objekte in die Signalverarbeitung des Videosignals mit einfließt.

In der WO 99/21356, der DE 198 24 260 A1, der US 2009/0097716 A1 und der US 2009/0160655 A1 sind Verfahren und Vorrichtungen zur Abstandsmessung eines Betrachters von einer Anzeigeeinrichtung beschrieben, wobei der Betrachter mittels einer Anzeige über einen optimalen Betrachtungsabstand informiert, dem Betrachter bei Unterschreiten eines vorher definierten Abstands ein Warnsignal ausgegeben oder bei einer Anwesenheit des Betrachters innerhalb eines vorbestimmten Entfernungsbereichs vor der Anzeigeeinrichtung bei Überschreiten einer vorbestimmten Zeitspanne ein Alarmsignal ausgegeben wird und/oder eine Stromversorgung der Anzeigeeinrichtung abgeschaltet wird.

In der US 2009/0116735 A1 ist ein Warnverfahren zum Vermeiden von Augenstress eines Computernutzers offengelegt, wobei aus einer Bildsequenz anhand verschiedener Merkmale eines Gesichts des Computernutzers ein Augenöffnungsgrad und eine Betrachtungszeit ermittelt werden.

Die US 6483485 B1 offenbart ein Verfahren und eine Vorrichtung zum Schutz und zur Schonung von Augen einer eine Anzeigeeinrichtung betrachtenden Person, wobei anhand eines Abstands zur Anzeigeeinrichtung, eines Anspannungsgrads und einer Umgebungshelligkeit die Anzeigeeinrichtung in Helligkeit, Kontrast, Farben und Deutlichkeit des Zeichensatzes angepasst sowie, bei einem Überschreiten der Umgebungshelligkeit, des Ermüdungsgrads und/oder des Abstands zur Anzeigeeinrichtung eine Warnung ausgegeben wird.

In der US 2011/0084897 A1 ist eine Vorrichtung beschrieben, bei der in Abhängigkeit von der Entfernung eines Benutzers an einer Anzeigeeinrichtung eine Größenänderung eines Zeichensatzes oder eines graphischen Objekts erfolgt, wobei eine Augengestik des Benutzers erfasst wird und aus dieser auf eine Augenanspannung des Benutzers geschlossen wird.

Die US 2012/0092172 A1 legt ein Verfahren zum Detektieren von mindestens einer Anspannung eines Betrachters einer Anzeigeeinrichtung offen, z. B. einer Augenanspannung, einer Nackenanspannung oder einer Rückenanspannung, wobei aus einer Kopfposition und einer Betrachtungsdauer auf eine Anspannung des Betrachters geschlossen wird.

Aus der US 2003/0218719 A1 geht ein Verfahren und eine Vorrichtung zum Bestimmen eines Grads an Schläfrigkeit einer Person hervor, wobei ein Auge der Person mittels Infrarotlicht abgetastet wird, um eine eindeutige Identifizierung der Person anhand einer abgetasteten Iris des Auges durchzuführen und aus Änderungen in einer Pupillengröße über einen Zeitabschnitt auf die Schläfrigkeit der Person zu schließen.

Die US 2013/0321617 A1 und die US 2014/0118354 A1 beschreiben Vorrichtungen und Verfahren zum Erfassen einer Entfernung zwischen einer Anzeigeeinrichtung und einem Benutzer und zum Anpassen einer Zeichensatzgröße eines an der Anzeigeeinrichtung dargestellten Informationsinhalts in Abhängigkeit des erfassten Abstands, wobei eine Verordnung einer Sehhilfe für den Benutzer oder dessen Altersweitsichtigkeit mit berücksichtigt werden kann.

In der EP 2 573 696 A2 ist eine Vorrichtung und ein Verfahren zur Unterstützung eines Benutzers bei einer Einnahme einer korrekten Betrachtungsposition gegenüber einer portablen Anzeigeeinrichtung offenbart, wobei eine Halswirbelsäulenstellung relativ zur Anzeigeeinrichtung bestimmt und bei Vorliegen einer nicht korrekten Betrachtungsposition eine Warnmeldung ausgegeben wird.

Die US 2009/0324024 A1 beschreibt eine Vorrichtung und ein Verfahren, um eine Körperhaltung eines Betrachters einer Anzeigeeinrichtung zu überwachen, wobei mittels einer Gesichtserkennung eine zuvor hinterlegte korrekte Körperhaltung erkannt wird und der Betrachter über ein Vorliegen einer korrekten Körperhaltung informiert wird.

Die US 2011/0080290 A1 offenbart Vorrichtungen und Verfahren zum Feststellen, ob sich eine Körperhaltung eines Betrachters einer Anzeigeeinrichtung in einem ergonomischen Referenzbereich befindet, und zum Auffordern des Benutzers, eine ergonomische Körperhaltung einzunehmen, und/oder zum Einstellen der Anzeigeeinrichtung, so dass sich die Körperhaltung des Betrachters in dem ergonomischen Referenzbereich befindet.

Aus der US 2012/0075166 A1 geht ein Verfahren und eine Vorrichtung zum automatischen Verändern einer Position eines oder mehrerer Elemente einer Anzeigeeinrichtung hervor, wobei die Positionsveränderung in Abhängigkeit einer Bewegung und/oder einer Körperhaltung eines Betrachters der Anzeigeeinrichtung durchgeführt wird.

Die DE 10 2006 011 233 A1 legt eine Vorrichtung und ein Verfahren zur Optimierung einer Bilddarstellung an einer Anzeigeeinrichtung offen, falls ein Betrachter auf die Anzeigeeinrichtung blickt, wobei eine Umgebungshelligkeit und/oder ein Kontrast der Anzeigeeinrichtung geändert werden.

Die US 2013/0293467 A1 beschreibt eine Vorrichtung zum Bestimmen, welcher einzelne Benutzer von mehreren verschiedenen potentiellen Benutzern eine Eingabe mittels eines einzigen Eingabegeräts an einer Vorrichtung vornimmt, wobei Blickrichtungen der Benutzer zur Vorrichtung erfasst und ausgewertet werden.

In der US 2013/0005443 A1 sind verschiedene Verfahren und Vorrichtungen für eine Gesichtserkennung anhand von Gesichtsmerkmalen, für eine Erkennung eines Gesichtsausdrucks und/oder für das Detektieren von Augenbewegungen mittels Eye-Tracking offengelegt.

Die DE 10 2004 051 159 A1 und die US 2012/0076368 A1 offenbaren Vorrichtungen und Verfahren zum Identifizieren einer Person anhand eines in einem Bild detektierten Gesichts der Person, wobei Pupillen und Augenbrauen des Gesichts mit Referenzpunkten versehen werden und Abstände zwischen diesen Referenzpunkten bei der Identifikation berücksichtigt werden, oder anhand von an Gesichtsmerkmalen auftretenden Änderungen, wie bspw. durch Mimik, eines in einer Serie von Einzelbildern detektierten Gesichts.

Aus der US 8 401 248 B1 gehen ein Verfahren und eine Vorrichtung zum Messen von Emotions- und Aufmerksamkeitsreaktionen einer Person gegenüber sich dynamisch ändernden digitalen Medieninhalten hervor, wobei ein Gesichtsausdruck und eine Blickrichtung der Person ausgewertet werden.

Die US 2011/0279359 A1 offenbart Vorrichtungen und Verfahren zum Erkennen von Mustern in Sensorsignalen, die einen Frustrationszustand eines Benutzers identifizieren, und zum Einstellen von Interaktionsmodi an einer Anzeigeeinrichtung, wobei der Frustrationszustand berücksichtigt wird.

Die WO 2007/102053 A2 beschreibt eine Vorrichtung und ein Verfahren zum Bestimmen einer menschlichen Emotion durch Analyse einer Kombination von Eigenschaften der Augen, wie z. B. Pupillengröße, Lidschlag, Augenposition, wobei positive, neutrale und negative Emotionsreaktionen unterschieden werden.

In der US 2013/0235058 A1 ist ein Verfahren zum Festlegen von Anzeigeparametern für eine Anzeigeeinrichtung in Abhängigkeit einer Entfernung der Anzeigeeinrichtung von einem Betrachter offengelegt, wobei umgebungsspezifische, informationsgehaltsspezifische und/oder benutzerspezifische Parameter, mit denen ein Verhalten des Benutzers beim Betrachten der Anzeigeeinrichtung berücksichtigt wird, mit einbezogen werden und Änderungen an diesen Parametern zu einer Anpassung der Darstellung an der Anzeigeeinrichtung führen.

Aus der DE 10 2011 114 074 A1 ist eine Mensch-Maschine-Schnittstelle für ein Kraftfahrzeug bekannt, bei der über ein berührungsempfindliches Display ein Nutzer des Kraftfahrzeugs beispielsweise mittels seines Fingerabdrucks identifiziert werden kann. Mittels einer Steuervorrichtung, die den Fingerabdruck verarbeitet, kann das Display dann personalisiert konfiguriert werden.

Der Erfindung liegt die Aufgabe zugrunde, ein Verfahren und eine Vorrichtung zum Steuern einer Anzeigeeinrichtung in einem Kraftfahrzeug zu schaffen, so dass eine Ermüdung einer die Anzeigeeinrichtung betrachtenden Person möglichst gering gehalten wird.

Eine weitere der Erfindung zugrundeliegende Aufgabe ist es, ein Verfahren und eine Vorrichtung zum Steuern einer Anzeigeeinrichtung in einem Kraftfahrzeug zu schaffen, so dass die Anzeigeeinrichtung ein ermüdungsfreies und entspanntes Betrachten durch eine Person erlaubt.

Eine oder mehrere dieser Aufgaben werden durch ein Verfahren oder durch eine Vorrichtung gemäß den unabhängigen Ansprüchen gelöst. Vorteilhafte Ausgestaltungen sind in den Unteransprüchen enthalten.

Ein Verfahren zum Steuern einer Anzeigeeinrichtung in einem Kraftfahrzeug umfasst die Schritte:
- Erfassen einer Körperhaltung einer Person mittels Sensoren, die entsprechende Sensorwerte erzeugen,
- Ermitteln anhand der erfassten Sensorwerte, ob sich die Person in einer eutonischen Körperhaltung befindet,
- Bestimmen eines Abstands zwischen Augen der Person und der Anzeigeeinrichtung mittels zumindest eines Sensors, wenn sich diese Person in einer eutonischen Körperhaltung befindet,
- Einstellen vorbestimmter Anzeigeparameter an der Anzeigeeinrichtung anhand dieses Abstands zwischen den Augen und der Anzeigeeinrichtung.

In einem Kraftfahrzeug bedeutet im Rahmen der Erfindung in einer Fahrgastzelle oder in einem Fahrzeuginnenraum.

Erfindungsgemäß ist somit vorgesehen, die Körperhaltung der Person zu erfassen und bei einer eutonischen Körperhaltung in Abhängigkeit des Abstands der Person von der Anzeigeeinrichtung vorbestimmte Anzeigeparameter einzustellen.

Die zum Einstellen an der Anzeigeeinrichtung vorbestimmten Anzeigeparameter sind für den jeweiligen Abstand zur Anzeigeeinrichtung derart ausgewählt, dass eine an der Anzeigeeinrichtung dargestellte Information besser lesbar bzw. erfassbar wird. Durch diese verbesserte Lesbarkeit bzw. Erfassbarkeit wird sichergestellt, dass die Person den dargestellten Inhalt einfach und effizient erfassen kann.

Die Lesbarkeit betrifft dabei sowohl eine Lesbarkeit einer als Text anzuzeigenden Information als auch eine Erkennbarkeit bzw. Erfassbarkeit von anderen graphischen Informationen, wie z. B. Symbolen, Bildern etc. Die Lesbarkeit hängt dabei bspw. von einer Größe einer dargestellten Information ab, wobei mit der Größe von Informationen bzw. von Anzeigeparametern die tatsächlichen Abmessungen eines angezeigten Objekts, wie eines Textes, Bilds, Symbols oder Bereichs gemeint sind. Die Größe angezeigter Objekte ist dabei abhängig von einem eingestellten Skalierungsfaktor, wobei die Lesbarkeit mit diesem Skalierungsfaktor korreliert. Der Skalierungsfaktor gibt den Grad einer Vergrößerung oder einer Verkleinerung von angezeigten Objekten an.

Des Weiteren ergibt sich für die Person keine Notwendigkeit, die Körperhaltung zu ändern bzw. eine eingenommene eutonische Körperhaltung zu verlassen, um den Anzeigeinhalt besser ablesen zu können. Da bereits eine gute Lesbarkeit der Anzeigeeinrichtung vorliegt, wird die Person dazu veranlasst, weiterhin eine eutonische Körperhaltung einzunehmen.

Die einfachere und effizientere Erfassung des dargestellten Inhalts vermindert eine Anspannung der die Anzeigeeinrichtung betrachtenden Person. Durch diese geringere Anspannung wird eine Ermüdung der Person möglichst gering gehalten und somit ein ermüdungsfreies Betrachten der Anzeigeeinrichtung ermöglicht.

Unter einer eutonischen Körperhaltung wird im Rahmen der vorliegenden Erfindung eine Körperhaltung verstanden, bei der sich eine Anspannung von Skelettmuskeln, die zum Bewegen von Extremitäten einer Person vorgesehen sind, in einem Bereich zwischen einem hypertonischen Zustand, in dem die Skelettmuskeln stark angespannt sind, und einem hypotonischen Zustand, in dem die Skelettmuskeln vollkommen entspannt und/oder erschlafft sind, befindet.

Grundsätzlich kann die Person eine Vielzahl von verschiedenen Körperhaltungen einnehmen, die sich oftmals nur marginal unterscheiden. Auf Grund dieser geringen Unterschiede lassen sich diese verschiedenen möglichen Körperhaltungen zweckmäßigerweise unterschiedlichen Bereichen von Körperhaltungen zuordnen, nämlich einem oder mehreren hypertonischen, einem oder mehreren hypotonischen und einem oder mehreren eutonischen Bereichen.

Eutonische Körperhaltungen zeichnen sich dabei dadurch aus, dass wesentliche Merkmale erfüllt sind, wie bspw. eine in etwa gleichmäßige Gewichtsverteilung um einen Schwerpunkt der Person und eine in etwa aufrechte Sitzposition mit einer in etwa geraden Wirbelsäule, wobei die Person Kontakt zu einer Rückenlehne hat bzw. sich daran anlehnt.

Durch die gleichmäßige Gewichtsverteilung und die in der aufrechten Sitzposition in etwa geraden Wirbelsäule wird eine einseitige Verdrehung des Körpers bzw. von Extremitäten, die zu Verspannungen der Skelettmuskeln führen kann, und eine Gewichtsverschiebung, die durch Anspannung von Skelettmuskeln auszugleichen wäre, um den Körper in einer stabilen Sitzposition zu halten, vermieden. Das Anlehnen an der Rückenlehne bewirkt ebenfalls eine Entspannung der Skelettmuskeln.

Eine Anspannung bzw. Verspannung führt oftmals zu einer Ermüdung. In einer solchen eutonischen Körperhaltung sind somit aufgrund der fehlenden Verspannung bzw. fehlenden Anspannung der Skelettmuskeln keine Ermüdungserscheinungen zu erwarten.

Andererseits ist in einer eutonischen Körperhaltung keine maximale Entspannung der Skelettmuskeln durch ein vollständiges Erschlaffen des Körpers gegeben. Ein solches vollständiges Erschlaffen ist nämlich ein Hinweis darauf, dass sich die Person in einem Zustand unmittelbar vor einem Einschlafen befindet oder sogar schläft. In einem derartigen Zustand liegt, bedingt durch eine Müdigkeit oder ein Schlafen, ein Mangel an Aufmerksamkeit der Person vor. Auch besteht die Möglichkeit, dass durch das Erschlaffen der Skelettmuskeln eine Körperhaltung eingenommen wird, bei der der Körper oder dessen Extremitäten keine gleichmäßige Gewichtsverteilung um einen Schwerpunkt der Person und eine in etwa aufrechte Sitzposition mit einer in etwa geraden Wirbelsäule mehr aufweist. Bei einer längeren Einnahme einer derartigen "schiefen" Körperhaltung ohne Veränderung kann dies zu Verspannungen der Skelettmuskeln führen.

Insofern ist eine eutonischen Körperhaltung eine Körperhaltung, bei der ein vollständiges Erschlaffen der Skelettmuskeln nicht gegeben ist und ein bestimmter Grad an Aufmerksamkeit der Person vorliegt.

Für eine eutonische Körperhaltung kann ein Grad an Eutonie bestimmt werden, indem Merkmale, die eine eutonische Körperhaltung definieren, nach vorbestimmten Regeln gewichtet werden und diese gewichteten Merkmale miteinander kombiniert werden.

Die Sensoren zum Erfassen der Körperhaltung erfassen eines oder mehrere der oben erläuterten Merkmale für eine eutonische Körperhaltung, nämlich die Gewichtsverteilung, bspw. an Hand von Druckwerten, und/oder die Position bzw. die Lage des Körpers und seiner Extremitäten, bspw. an Hand eines Kamerabilds oder an Hand von dreidimensionalen Daten.

Mittels der Auswertung dieser Sensordaten bzw. Sensorwerte wird es ermöglicht, eine eingenommene Körperhaltung als eine eutonische Körperhaltung zu erkennen, diese einem eutonischen Bereich zuzuordnen und/oder dieser einen Grad an Eutonie zuzuordnen.

Die Sensoren zum Erfassen einer Körperhaltung sowie weitere Sensoren zum Bestimmen einer eutonischen Körperhaltung, werden nachfolgend noch detaillierter erläutert.

Sensoren zur Bestimmung der Gewichtsverteilung können zumindest als zwei Drucksensoren ausgebildet sind, die in einem Autositz, einer Sitzfläche, Rückenlehne, Kopfstütze, Mittelkonsole, Armauflage, Innenverkleidung, Unterschenkelauflage, Fußauflage und/oder in einem Fußbodenbereich des Kraftfahrzeugs angeordnet sind. Ein Sensor zur Bestimmung der Körperhaltung kann eine Kamera, einen Laserscanner, ein Radargerät, ein Ultraschallgerät und/oder eine Mikrowellengerät umfassen, womit die Person erfasst wird. Dabei können die Sensorwerte einer Auswertung zugeführt werden, mittels der eine Körperhaltung der Person aus den Sensorwerten extrahiert wird.

Im Rahmen eines erfindungsgemäßen Verfahrens können weitere Sensorwerte für die Beurteilung, ob sich die Person in einer eutonischen Körperhaltung befindet, erfasst und berücksichtigt werden, wobei mittels einer Kamera zumindest ein Gesicht der Person erfasst wird, aus den Kameradaten eine Mimik der Person extrahiert wird und anhand der Mimik ein Entspannungsgrad der Person bestimmt wird, wobei in einer eutonischen Körperhaltung die Person einen hohen Grad an Entspannung aufweist.

Im Rahmen eines erfindungsgemäßen Verfahrens kann auch mittels einer Kamera zumindest eine Augenpartie der Person erfasst werden, aus den Kameradaten eine Augengeometrie der Person extrahiert werden und anhand der Augengeometrie ein Augenöffnungsgrad und/oder eine Augenanspannung der Person bestimmt werden, wobei in einer eutonischen Körperhaltung die Person einen durchschnittlichen Augenöffnungsgrad und/oder eine niedrige Augenanspannung aufweist.

Im Rahmen eines erfindungsgemäßen Verfahrens kann auch mittels einer Kamera, eines Laserscanners, eines Radargeräts, eines Ultraschallgeräts und/oder eines Mikrowellengeräts eine Atemfrequenz der Person bestimmt werden und anhand der Atemfrequenz ein Entspannungsgrad der Person bestimmt werden, wobei in einer eutonischen Körperhaltung die Person eine niedrige Atemfrequenz und somit einen hohen Grad an Entspannung aufweist.

Im Rahmen eines erfindungsgemäßen Verfahrens kann weiterhin mittels eines Pulsmessgeräts, das als ein Pulsmesser, ein Radargerät, ein Ultraschallgerät und/oder ein Mikrowellengerät ausgebildet ist, ein Puls der Person bestimmt werden und anhand des Pulses ein Entspannungsgrad der Person bestimmt werden, wobei in einer eutonischen Körperhaltung die Person einen niedrigen Puls und somit einen hohen Grad an Entspannung aufweist.

Im Rahmen eines erfindungsgemäßen Verfahrens kann zudem für eine eutonische Körperhaltung ein Grad an Eutonie bestimmt werden, indem die für die Beurteilung einer eutonischen Körperhaltung erfassten Sensorwerte nach vorbestimmten Regeln gewichtet werden und diese gewichteten Sensorwerte miteinander kombiniert werden.

Im Rahmen eines erfindungsgemäßen Verfahrens können die einstellbaren Anzeigeparameter eine Helligkeit, einen Kontrast, eine Farbe, ein Farbschema, eine Farbtemperatur, eine Auflösung, eine Bildgröße, eine Zeichensatzgröße, einen Zeichensatzschnitt, eine Symbolgröße, eine Anzeigebereichsgröße, eine Anzeigefenstergröße, eine Anzeigefensteranordnung, einen Skalierungsfaktor und/oder eine Auswahl angezeigter Informationen aus potenziell anzuzeigenden Informationen umfassen.

Im Rahmen eines erfindungsgemäßen Verfahrens können bei Vorhandensein zumindest einer weiteren Anzeigeeinrichtung, Abstände zwischen Augen einer Person und jeder weiteren Anzeigeeinrichtung bestimmt werden und nach vorbestimmten Regeln und/oder in Abhängigkeit des Abstands zwischen den Augen und der jeweiligen Anzeigeeinrichtung eine anzuzeigende Information zwischen den verschiedenen Anzeigeeinrichtungen verteilt werden. Dabei kann die Bestimmung des Abstands zwischen den Augen der Person und der Anzeigeeinrichtung mittels zumindest eines Sensors erfolgen, wobei dieser Sensor insbesondere als eine Stereokamera, eine Laufzeitkamera, ein Laserscanner, ein Radargerät, ein Ultraschallgerät und/oder ein Mikrowellengerät ausgebildet sein kann.

Die Anzeigeeinrichtung kann ein Bildschirm sein, der in einem Kraftfahrzeug angeordnet ist, so dass dieser von einem Fahrer und/oder einem Passagier betrachtet werden kann. Eine derartige Anzeigeeinrichtung kann in einer rückwärtigen Seite eines Autositzes oder einer Kopfstütze, in einer Mittelkonsole, in einer Armauflage, in einer Fahrzeugtür, in einer Innenverkleidung (z. B. herausklappbar im Dachhimmel integriert oder in einer A-/B-/C-/D-Säule etc.) oder in einem Cockpit, vorzugsweise in einem Armaturenbrett, des Fahrzeugs angeordnet sein. Die in der rückwärtigen Seite eines der Autositze oder einer der Kopfstützen angeordnete Anzeigeeinrichtung kann dabei von einer Person, die im Fond des Kraftfahrzeugs sitzt, betrachtet werden.

Die Anzeigeeinrichtung kann weiterhin einen Geschwindigkeitsmesser bzw. eine Tachometeranzeige, ein Kombiinstrument, ein Multifunktionsdisplay oder ein Head-Up-Display umfassen.

Die Anzeigeeinrichtung kann in Form mehrerer an unterschiedlichen Positionen im Kraftfahrzeug angeordneter Anzeigeeinrichtungen ausgebildet sein.

Nach einem weiteren Aspekt der vorliegenden Erfindung umfasst ein Verfahren zum Steuern einer Anzeigeeinrichtung in einem Kraftfahrzeug die folgenden Schritte:
- Erfassen von biometrischen Daten einer Person mittels Sensoren,
- Erstellen eines Profils bevorzugter Anzeigeparameter für diese Person,
- Verknüpftes Speichern der erfassten biometrischen Daten dieser Person und des Profils der bevorzugten Anzeigeparameter, um die Anzeigeeinrichtung gemäß den bevorzugten Anzeigeparametern anzusteuern, wobei
überwacht wird, ob die Person eine eutonische Körperhaltung einnimmt, und wenn die Person eine eutonische Körperhaltung einnimmt, dann wird das Profil aktuell eingestellter Anzeigeparameter als bevorzugte Anzeigeparameter verknüpft mit den erfassten biometrischen Daten dieser Person gespeichert.

Hierbei ist eine automatische Zuordnung von bevorzugten Anzeigeparametern zu einer Person anhand von biometrischen Daten in einem Kraftfahrzeug möglich. Dadurch kann eine Person die von ihr bevorzugten Anzeigeparameter im Rahmen einer Erstkonfiguration festlegen.

Durch das verknüpfte Speichern der erfassten biometrischen Daten einer Person und des Profils der bevorzugten Anzeigeparameter sind die bevorzugten Anzeigeparameter dieser Person zugeordnet und können an der Anzeigeeinrichtung selbsttätig eingestellt werden, wenn diese Person bei einer erneuten Identifizierung wiedererkannt wird.

Das Verfahren zum Steuern einer Anzeigeeinrichtung in einem Kraftfahrzeug kann derart ausgebildet sein, dass das Erstellen eines Profils bevorzugter Anzeigeparameter für die Person durch ein Anzeigen unterschiedlicher Anzeigebilder an der Anzeigeeinrichtung und Erfassen einer Rückmeldung der Person erfolgt.

Dadurch ist die Möglichkeit gegeben, der Person unterschiedliche Anzeigebilder zu präsentieren, aus der die Person sich schnell und effizient das bevorzugte Anzeigebild auswählen kann. Die unterschiedlichen Anzeigebilder weisen dabei unterschiedliche Anzeigeparameter auf. Durch das Auswählen aus unterschiedlichen Anzeigebildern wird die Profilerstellung der bevorzugten Anzeigeparameter wesentlich vereinfacht.

Das Anzeigen unterschiedlicher Anzeigebilder an der Anzeigeeinrichtung kann durch ein Verändern der Anzeigeparameter erfolgen.

Das Verändern der Anzeigeparameter kann dabei von der Person oder beim Ausführen des Verfahrens selbsttätig ausgeführt werden. Dadurch können einzelne Anzeigeparameter selektiv, manuell oder automatisch, verändert werden und das Profil der bevorzugten Anzeigeparameter individuell für jeden Anzeigeparameter an die Präferenzen der Person angepasst werden.

Das Erfassen der Rückmeldung kann mittels einer Eingabe an einer Eingabeeinrichtung und/oder durch das Erfassen einer Körperhaltung der Person mittels Sensoren, die entsprechende Sensorwerte erzeugen, durchgeführt werden. Die Eingabeeinrichtung kann dabei als eine Tastatur, ein oder mehrere Bedienknöpfe, ein berührempfindlicher Bildschirm und/oder ein Mikrofon für eine Spracheingabe ausgebildet sein.

Mittels einer Eingabe an der Eingabeeinrichtung, die als Tastatur, ein oder mehrere Bedienknöpfe oder als berührempfindlicher Bildschirm ausgebildet ist, kann die Rückmeldung mit geringem technischem Aufwand erfolgen.

Bei einer Rückmeldung mittels Spracheingabe ist sichergestellt, dass sich die Person weiterhin in ihrer gewählten Sitzposition bzw. eingenommenen Körperhaltung befindet, da sie sich nicht bewegen muss, um eine Tastatur, Bedienknöpfe oder einen berührempfindlichen Bildschirm zu bedienen.

Durch das Erfassen einer Körperhaltung der Person mittels Sensoren kann die Rückmeldung der Person auf geänderte bzw. sich verändernde Anzeigeparameter automatisch erfasst werden. Ist z. B. die Anzeigeeinrichtung bei einer bestimmten Einstellung eines Anzeigeparameters nur schlecht bzw. nicht optimal ablesbar bzw. erfassbar, dann kann ein Vorbeugen der Person, um die Anzeigeeinrichtung besser ablesen zu können, erkannt werden.

Zusätzlich kann die Verweildauer, in welcher sich die Person in einer bestimmten Haltung befindet, gemessen werden, um beispielsweise ein Herumrutschen auf dem bzw. Zurechtrücken im Autositz, das oftmals wenige Sekunden andauert, von einer länger andauernden Sitz- bzw. Stützposition zu unterscheiden.

Aus dem jeweiligen Verhalten der Person kann somit auf die Lesbarkeit der Anzeige für die aktuell eingestellten Anzeigeparameter geschlossen werden. Dadurch können Fehler beim automatischen Verändern von Anzeigeparametern minimiert werden und das Erstellen des Profils der bevorzugten Anzeigeparameter effizienter, genauer sowie komfortabler durchgeführt werden.

Somit können durch das Erfassen der Rückmeldung der Person aktuell eingestellte Anzeigeparameter als bevorzugte Anzeigeparameter bestätigt werden.

Durch das Überwachen, ob die Person eine eutonische Körperhaltung einnimmt, können bei Einnehmen dieser eutonischen Körperhaltung die aktuell eingestellten Anzeigeparameter als Anzeigeparameter festgelegt werden, die der Person eine eutonische Körperhaltung bei gleichzeitig verbesserter Lesbarkeit der Anzeigeeinrichtung ermöglichen. Dadurch wird sichergestellt, dass die bevorzugten Anzeigeparameter diejenigen sind, die der Person ein Einnehmen einer eutonischen Körperhaltung und somit ein ermüdungsfreies und entspanntes Betrachten der Anzeigeeinrichtung ermöglichen.

Weiterhin kann das Verfahren derart ausgebildet sein, dass überwacht wird, ob die Person eine eutonische Körperhaltung einnimmt, und wenn dies der Fall ist, dann kann ein Grad an Eutonie der Körperhaltung ermittelt werden. Das Profil der eingestellten Anzeigeparameter kann verknüpft mit den erfassten biometrischen Daten dieser Person zusammen mit diesem Grad an Eutonie nur dann gespeichert werden, wenn der Grad an Eutonie einen zuvor gespeicherten Grad an Eutonie eines anderen Profils von Anzeigeparametern dieser Person übersteigt oder zuvor kein anderes Profil von Anzeigeparametern dieser Person gespeichert wurde.

Dadurch werden automatisch bei Einnahme einer Körperhaltung, die eutonischer ist, d. h. die einen höheren Grad an Eutonie aufweist, als eine zuvor eingenommene Körperhaltung, die eingestellten Anzeigeparameter für diese Person gespeichert. Somit kann die Person durch wiederholtes Verändern der Position versuchen, eine möglichst eutonische Körperhaltung einzunehmen und die Anzeigeparameter für diese Körperhaltung liegen danach gespeichert vor.

Falls jedoch keine Anzeigeparameter für diese Person vorliegen und eine eutonische Körperhaltung erkannt wird, dann werden Anzeigeparameter für diese Person als Erstkonfiguration selbsttätig gespeichert.

Bei der Ausführung des Verfahrens kann ein Abstand zwischen Augen der Person und der Anzeigeeinrichtung mittels zumindest eines Sensors bestimmt und der Abstand verknüpft mit den biometrischen Daten der Person und des Profils der bevorzugten Anzeigeparameter gespeichert werden.

Dadurch ist eine Abstandsinformation für die bevorzugten Anzeigeparameter der Person gespeichert, so dass diese Abstandsinformation bei einem späteren Einstellvorgang von Anzeigeparametern mit berücksichtigt werden kann. Dies verbessert die Genauigkeit, mit der Anzeigeparameter an der Anzeigeeinrichtung eingestellt werden können, wie es weiter unten erläutert ist.

Das Verfahren kann weiterhin die Schritte umfassen:
- Erfassen von biometrischen Daten einer Person mittels Sensoren und Identifizieren dieser Person anhand der zuvor gespeicherten biometrischen Daten,
- Bestimmen eines aktuellen Abstands zwischen Augen der identifizierten Person und der Anzeigeeinrichtung mittels zumindest eines Sensors,
- Anpassen der mit den biometrischen Daten der identifizierten Person verknüpft gespeicherten Anzeigeparameter in Abhängigkeit einer Abweichung zwischen dem gespeicherten Abstand und dem aktuellen Abstand sowie Einstellen der an den aktuellen Abstand angepassten Anzeigeparameter an der Anzeigeeinrichtung.

Durch das Erfassen von biometrischen Daten können die mit der Person verknüpften Anzeigeparameter bei Erkennen bzw. beim Identifizieren der Person gelesen werden, so dass diese Anzeigeparameter weiterverarbeitet werden können. Ein Erkennen einer bereits identifizierten Person kann bspw. erfolgen, wenn die Person in das Kraftfahrzeug einsteigt oder die Anzeigeeinrichtung in Betrieb nimmt, um sich an der Anzeigeeinrichtung Informationen anzeigen zu lassen.

Durch Bestimmen des aktuellen Abstands der Augen zur Anzeigeeinrichtung, Ermitteln der Abweichung zum gespeicherten Abstand, mit dem die Person die bevorzugten Anzeigeparameter eingestellt hatte, und dem Anpassen der zum Einstellen der Anzeigeeinrichtung verwendeten Anzeigeparametern in Abhängigkeit der Abweichung können diese Anzeigeparameter optimal für den aktuellen Abstand eingestellt werden. Die für die Person eingestellten Anzeigeparameter basieren somit auf deren bevorzugten Anzeigeparametern, sind jedoch an den aktuellen Abstand zur Anzeigeeinrichtung anpassbar. Dies kann bspw. Anzeigeparameter betreffen, die einen Zeichensatzschnitt, eine Auflösung, den Skalierungsfaktor und/oder eine Größe eines Anzeigebereichs, eines Bildes, eines Zeichensatzes, eines Symbols und/oder eines Anzeigefensters definieren. Befinden sich die Augen der Person aktuell näher an der Anzeigeeinrichtung als der gespeicherte Abstand, dann kann bspw. der Skalierungsfaktor verkleinert werden, so dass die angezeigten Objekte kleiner werden, aber gleichzeitig ggf. mehr Objekte an der Anzeigeeinrichtung angezeigt werden können. Befinden sich die Augen hingegen aktuell weiter weg als der gespeicherte Abstand, dann kann der Skalierungsfaktor vergrößert werden, so dass die Größe der angezeigten Objekte zunimmt, wobei dann ggf. weniger Objekte anzeigbar sind.

Alternativ kann das Verfahren zum Steuern einer Anzeigeeinrichtung in einem Kraftfahrzeug weiterhin die Schritte umfassen:
- Erfassen von biometrischen Daten einer Person mittels Sensoren und Identifizieren dieser Person anhand der zuvor gespeicherten biometrischen Daten,
- insbesondere automatisches bzw. selbsttätiges, Einstellen der mit den biometrischen Daten der identifizierten Person verknüpften Anzeigeparameter an der Anzeigeeinrichtung.

Dadurch können die mit der Person verknüpften Anzeigeparameter bei Erkennen bzw. beim Identifizieren der Person automatisch an der Anzeigeeinrichtung eingestellt werden. Ein Erkennen einer bereits identifizierten Person kann bspw. erfolgen, wenn die Person in das Kraftfahrzeug einsteigt oder die Anzeigeeinrichtung in Betrieb nimmt, um sich an der Anzeigeeinrichtung Informationen anzeigen zu lassen.

Die Sensoren zum Erfassen von biometrischen Daten können eine Kamera, ein Laserscanner, ein Ultraschallgerät, ein Radargerät und/oder ein Mikrowellengerät zum Erfassen einer Gesichtsgeometrie, einer Ohrengeometrie, einer Körperform, eines Körperumrisses und/oder einer Körpergröße, eine Kamera und/oder ein Laserscanner zum Erfassen einer Iris und/oder einer Retina, ein Mikrofon zum Erkennen einer Stimme, einen Drucksensor zum Erfassen eines Gewichts und/oder einen Fingerabdrucksensor zum Erfassen eines Fingerabdrucks umfassen.

Da ein Kraftfahrzeug oftmals von nur wenigen verschiedenen Personen genutzt wird, ermöglicht bereits eine Erfassung und Auswertung einfacher biometrischer Daten, wie z. B. das Gewicht einer Person, eine effiziente Identifizierung der jeweiligen Person.

Die Kamera kann dabei in Form eines einzelnen Kameramoduls oder mehrerer einzelner Kameramodule ausgebildet sein. Ebenfalls kann die Kamera eine Stereokamera oder eine Laufzeitkamera sein, so dass auch eine Abstandsmessung ermöglicht wird.

Nach einem weiteren Aspekt der vorliegenden Erfindung umfasst ein Verfahren zum Steuern einer Anzeigeeinrichtung in einem Kraftfahrzeug die Schritte:
- Überwachen eines Abstands zwischen Augen einer Person und einer Anzeigeeinrichtung und/oder Überwachen einer Körperhaltung einer Person,
- Anpassen von Anzeigeparametern entsprechend des erfassten Abstands und/oder der erfassten Körperhaltung, wobei
überwacht wird, ob die Person eine eutonische Körperhaltung einnimmt, und die geänderten Anzeigeparameter als eingestellte Anzeigeparameter gespeichert werden, falls diese Einnahme einer eutonischen Körperhaltung festgestellt wird.

Durch das Überwachen des Abstands zwischen den Augen der Person und der Anzeigeeinrichtung und Anpassen von Anzeigeparametern wird sichergestellt, dass die Person die Anzeigeeinrichtung ermüdungsfrei und entspannt ablesen kann. Alternativ oder zusätzlich kann dabei die Körperhaltung der Person überwacht werden, sodass die Darstellung an der Anzeigeeinrichtung derart angepasst werden kann, dass für die Person in ihrer jeweiligen Körperhaltung eine optimale Lesbarkeit der Anzeigeeinrichtung gewährleistet ist.

Die eingestellten Anzeigeparameter können dabei derart verändert werden, dass die Person dahingehend beeinflusst wird, eine eutonische Körperhaltung einzunehmen. Dadurch kann eine Person dazu bewegt werden, ihre Körperhaltung derart anzupassen, dass sie eine eutonische Körperhaltung einnimmt und somit die Anzeigeeinrichtung ermüdungsfrei und entspannt betrachten kann.

Dieses ermöglicht eine Überprüfung, ob die Person nach einer Änderung der Anzeigeparameter eine eutonische Körperhaltung eingenommen hat. Falls dieses der Fall ist, dann werden die geänderten Anzeigeparameter als Einstellung der Anzeigeeinrichtung bestätigt.

Es kann jedoch auch vorkommen, dass nach einer Änderung der Anzeigeparameter festgestellt wird, bspw. nach Ablauf einer vorbestimmten Wartezeit, dass die Person keine eutonische Körperhaltung eingenommen hat bzw. ihre Körperhaltung nicht verändert hat. In einem solchen Fall können andere Anzeigeparameter für eine andere eutonische Körperhaltung eingestellt werden, um die Person weiterhin zu beeinflussen, ihre Körperhaltung in eine eutonische zu ändern. Alternativ dazu kann das aktive Ändern der Anzeigeparameter blockiert werden und zu den ursprünglichen Anzeigeparametern zurückgekehrt werden, wobei diese Blockade für eine vorbestimmte Wartezeit aufrecht erhalten bleiben kann. Dies dient dazu, Stress durch wiederholte oder schnell aufeinanderfolgende Änderungen der Anzeigeparameter bei einer Person, die offensichtlich nicht gewillt ist, eine eutonische Körperhaltung einzunehmen, zu vermeiden.

Verknüpft mit den biometrischen Daten der Person können auch Parameter einer Sitzeinstellung bzw. einer Sitzposition gespeichert sein, in welcher die Person eine eutonische Körperhaltung einnehmen kann bzw. konnte. Diese Parameter sind bspw. zuvor bei der Erstkonfiguration mit erfasst und gespeichert worden.

Ist der Autositz bei einem Einsteigen der Person aus dieser Sitzposition verstellt, kann durch automatische Rückführung des Autositzes in diese abgespeicherte Sitzposition ein schnelleres Erreichen einer eutonischen Körperhaltung der Person ermöglicht werden.

Eine solche Rückführung des Autositzes kann beispielsweise dann ausgelöst werden, wenn die Person die Anzeigeeinrichtung einschaltet, zu welcher die Sitzeinstellung korrespondiert, oder Informationen anfordert, die auf dieser Anzeigeeinrichtung darzustellen sind.

Um zu ermitteln, ob die Person eine eutonische Körperhaltung aufweist, können mittels geeigneter Sensoren eine Gewichtsverteilung und/oder eine Körperhaltung der Person bestimmt werden. Anhand dieser Gewichtsverteilung und/oder dieser Körperhaltung kann beurteilt werden, ob die Person eine eutonische Körperhaltung einnimmt.

Die Sensoren zur Bestimmung der Gewichtsverteilung können als zumindest zwei Drucksensoren ausgebildet sein, die in einem Autositz, einer Sitzfläche, Rückenlehne, Kopfstütze, Mittelkonsole, Armauflage, Innenverkleidung, Unterschenkelauflage, Fußauflage und/oder in einem Fußbodenbereich des Kraftfahrzeugs angeordnet sind.

Der Fußbodenbereich umfasst dabei im Kraftfahrzeug einen Innenboden, einen Bodenbelag, wie bspw. eine Fußmatte oder ein Teppichboden, und den Bereich von Pedalen, auf die Füße auflegbar sind.

Je mehr Drucksensoren vorgesehen sind, desto genauer kann eine Gewichtsverteilung ermittelt werden, da über eine Vielzahl von Drucksensoren die Verteilung eines Auflagedrucks und damit eines Gewichts genauer bestimmt werden kann, als bei Vorliegen von nur wenigen Drucksensoren. Die Verteilung bzw. die Anordnung der Drucksensoren in Auflageflächen, auf denen Körperteile der Person aufliegen, kann dabei bei der Bestimmung der Gewichtsverteilung mit berücksichtigt werden.

Der Sensor zur Bestimmung der Körperhaltung kann eine Kamera, ein Laserscanner, ein Radargerät, ein Ultraschallgerät und/oder ein Mikrowellengerät umfassen. Ein derartiger Sensor erfasst die Person, und die Sensorwerte werden einer Auswertung zugeführt, sodass eine Körperhaltung der Person aus den Sensorwerten extrahiert werden kann.

Zur Beurteilung, ob sich die Person in einer eutonischen Körperhaltung befindet, können weitere Sensorwerte erfasst und berücksichtigt werden. Dabei kann mittels einer Kamera zumindest ein Gesicht der Person erfasst und aus den Kameradaten eine Mimik der Person extrahiert werden. Anhand der Mimik kann ein Entspannungsgrad der Person bestimmt werden, wobei in einer eutonischen Körperhaltung die Person einen hohen Grad an Entspannung aufweist. Auch kann mittels einer Kamera zumindest eine Augenpartie der Person erfasst werden. Aus den Kameradaten kann eine Augengeometrie der Person extrahiert werden und anhand der Augengeometrie ein Augenöffnungsgrad und/oder eine Augenanspannung der Person bestimmt werden. Dabei weist in einer eutonischen Körperhaltung die Person einen durchschnittlichen Augenöffnungsgrad und/oder eine niedrige Augenanspannung auf. Auch kann mittels einer Kamera, eines Laserscanner, eines Radargeräts, eines Ultraschallgeräts und/oder eines Mikrowellengeräts eine Atemfrequenz der Person bestimmt werden. Anhand der Atemfrequenz kann ein Entspannungsgrad der Person bestimmt werden, wobei in einer eutonischen Körperhaltung die Person eine niedrige Atemfrequenz und somit einen hohen Grad an Entspannung aufweist. Ebenfalls kann mittels eines Pulsmessgeräts, das als ein Pulsmesser, ein Radargerät, ein Ultraschallgerät und/oder ein Mikrowellengerät ausgebildet ist, ein Puls der Person bestimmt werden. Anhand des Pulses kann ein Entspannungsgrad der Person bestimmt werden, wobei in einer eutonischen Körperhaltung die Person einen niedrigen Puls und somit einen hohen Grad an Entspannung aufweist.

Durch das Einbeziehen weiterer Sensorwerte in die Beurteilung, ob sich die Person in einer eutonischen Körperhaltung befindet, kann das Vorhandensein einer eutonischen Körperhaltung mit größerer Genauigkeit bestimmt werden, als dieses mittels der Bestimmung der Gewichtsverteilung und/oder der Körperhaltung alleine möglich ist.

Die an der Anzeigeeinrichtung einstellbaren Anzeigeparameter umfassen eine Helligkeit, einen Kontrast, eine Farbe, ein Farbschema, eine Farbtemperatur, eine Auflösung, eine Bildgröße, eine Zeichensatzgröße, einen Zeichensatzschnitt, eine Symbolgröße, eine Anzeigebereichsgröße, eine Anzeigefenstergröße, eine Anzeigefensteranordnung, einen Skalierungsfaktor und/oder eine Auswahl angezeigter Informationen aus potenziell anzuzeigenden Informationen.

Durch Variieren dieser Anzeigeparameter kann die Lesbarkeit erhöht und somit ein ermüdungsfreies Betrachten der Anzeigeeinrichtung erreicht werden.

Durch die Auswahl der angezeigten Informationen aus den potenziell anzuzeigenden Informationen lässt sich die Menge an Informationen, die an der Anzeigeeinrichtung dargestellt werden, verringern, sodass eine Vergrößerung der jeweiligen angezeigten Informationen für eine gegebene Bildschirmgröße bzw. -auflösung ermöglicht wird. Durch eine derartige Vergrößerung wird die Lesbarkeit der angezeigten Information erhöht.

Die Zeichensatzgröße stellt dabei eine besondere Form einer Bildgröße dar, da die Zeichensatzgröße mit der in der jeweiligen Auflösung belegten Anzahl an Bildpunkten korreliert.

Bei Vorhandensein zumindest einer weiteren Anzeigeeinrichtung können die Abstände zwischen den Augen der Person und jeder weiteren Anzeigeeinrichtung bestimmt werden. Nach vorbestimmten Regeln und/oder in Abhängigkeit des Abstandes zwischen den Augen und der jeweiligen Anzeigeeinrichtung kann eine anzuzeigende Information zwischen den verschiedenen Anzeigeeinrichtungen verteilt werden.

Dadurch lässt sich die anzuzeigende Information derart verteilen, dass unterschiedliche Anteile dieser Information an unterschiedlichen Anzeigeeinrichtungen dargestellt werden. Dies ermöglicht es, durch eine reduzierte Menge anzuzeigender Information diese an der jeweiligen Anzeigeeinrichtung vergrößert darstellen zu können, sodass die Lesbarkeit verbessert werden kann.

Die Verteilung der anzuzeigenden Information auf verschiedene Anzeigeeinrichtungen kann dabei in Abhängigkeit eines Informationsgehalts, eines Informationstyps, einer Relevanz der jeweiligen Information, nach einer vorbestimmten Priorität vorhandener Anzeigeeinrichtungen und/oder deren technischen Eigenschaften bzw. technischen Beschränkungen erfolgen und selbsttätig durchgeführt werden. Auch kann eine Vorgabe von Präferenzen für die Verteilung der Informationen durch die betrachtende Person erfolgen.

Dadurch kann die jeweilige anzuzeigende Information mit optimaler Lesbarkeit an den verschiedenen Anzeigeeinrichtungen dargestellt werden.

Ein Sensor zur Bestimmung des Abstands zwischen den Augen der Person und der Anzeigeeinrichtung kann dabei als eine Stereokamera, eine Laufzeitkamera, ein Laserscanner, ein Radargerät, ein Ultraschallgerät und/oder ein Mikrowellengerät ausgebildet sein.

Diese Sensoren lassen sich ebenfalls zur Bestimmung, ob eine eutonische Körperhaltung vorliegt, verwenden, wie es oben erläutert ist. Dadurch können bereits zur Bestimmung der Körperhaltung vorgesehene Sensoren auch zur Abstandsbestimmung verwendet werden.

Nach einem weiteren Aspekt der vorliegenden Erfindung umfasst eine Vorrichtung zum Steuern einer Anzeigeeinrichtung in einem Kraftfahrzeug eine Steuereinrichtung, die mit einer Anzeigeeinrichtung und mit Sensoren verbindbar ist. Dabei ist die Steuereinrichtung dazu ausgebildet, ein oder mehrere Verfahren in Kombination miteinander, wie sie oben erläutert sind, auszuführen.

Es zeigen:
- Figur 1: eine Vorrichtung zum Steuern einer Anzeigeeinrichtung in einem Kraftfahrzeug, und

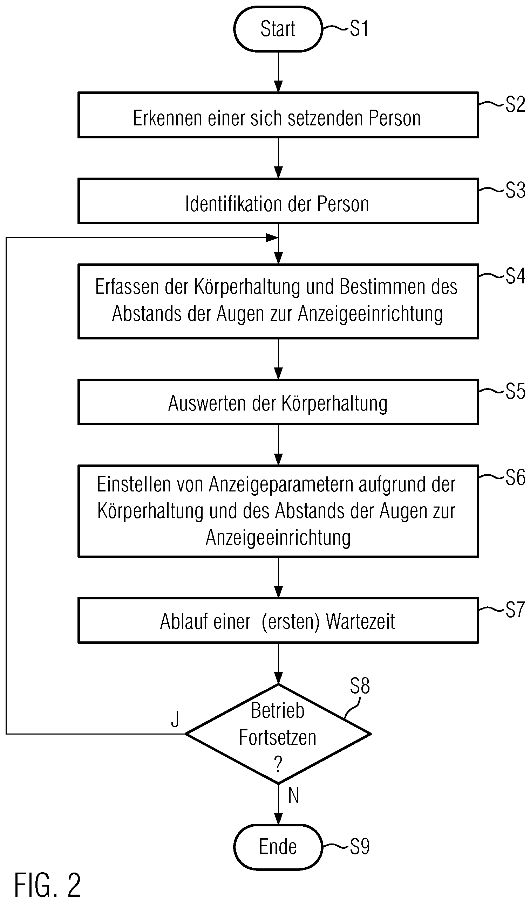

- Figur 2: ein Verfahren zum Erfassen einer Körperhaltung und zum Auswerten, ob die Körperhaltung eine eutonische Körperhaltung ist.

Nachfolgend wird ein Ausführungsbeispiel einer Vorrichtung zum Steuern einer Anzeigeeinrichtung, die nachfolgend als Anzeigesteuervorrichtung 1 bezeichnet ist, in einem Kraftfahrzeug erläutert.

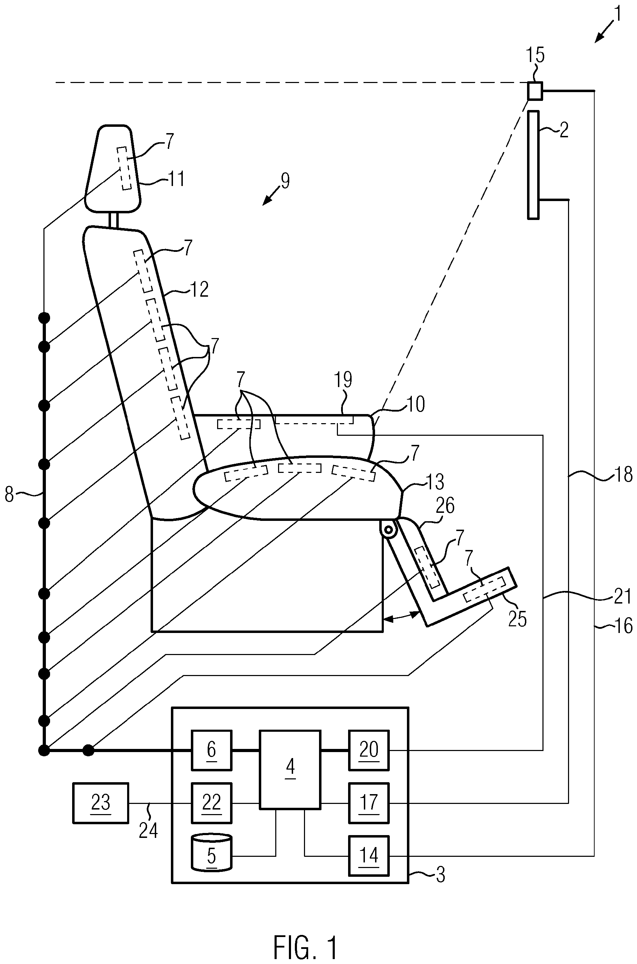

Ein Kraftfahrzeug (nicht gezeigt) ist mit der Anzeigesteuervorrichtung 1 versehen, die mittels geeigneter Sensoren eine Körperhaltung einer Person erfasst, die Körperhaltung bewertet und anhand der Bewertung eine Anzeigeeinrichtung 2 steuert, wobei vorbestimmte Anzeigeparameter an der Anzeigeeinrichtung 2 eingestellt werden (Figur 1).

Die Anzeigesteuervorrichtung 1 weist eine Steuereinrichtung 3 auf, die mit der Anzeigeeinrichtung 2 verbunden ist. Die Steuereinrichtung 3 ist als ein Computer mit einer CPU-Speichereinrichtung und geeigneten Schnittstellen ausgebildet, der die Anzeigesteuervorrichtung 1 zentral steuert.

Die Steuereinrichtung 3 umfasst einen Mikroprozessor 4, auf dem ein Computerprogramm ausführbar ist und ausgeführt wird, das die Funktionalität der Steuereinrichtung 3 bereitstellt.

Der Mikroprozessor 4 ist mit einer Speichereinrichtung 5 zum Speichern von Daten verbunden. Diese Daten umfassen dabei Profile bevorzugter Anzeigeparameter, biometrische Daten von Personen, Verteilungsfunktionen, Schwellwerte für die Beurteilung der Körperhaltung einer Person anhand einer Gewichtsverteilung, Regeln für ein Einstellen vorbestimmter Anzeigeparameter an der Anzeigeeinrichtung 2, Standardwerte für Anzeigeparameter, Bilddaten einer erfassten Person und/oder anzuzeigende Informationen.

Weiterhin ist der Mikroprozessor 4 mit einer Drucksensorenschnittstelle 6 verbunden, über die der Mikroprozessor 4 Sensorwerte von Drucksensoren 7 empfängt.

Die Drucksensoren 7 sind dabei über eine Busverbindung 8 mit der Drucksensorenschnittstelle 6 verbunden. Die Drucksensoren 7 sind in einem Autositz 9, in einer an dem Autositz 9 angrenzenden Mittelkonsole 10, in einer Armauflage (nicht gezeigt), die in einer Türinnenverkleidung (nicht gezeigt) integriert ist, angeordnet. Der Autositz 9 weist mehrere Drucksensoren 7 auf, während die Mittelkonsole 10 und die Armauflage jeweils einen Drucksensor 7 aufweisen. Mittels der Drucksensoren 7 kann eine Druckeinwirkung gemessen bzw. erfasst werden. Diese Druckdaten werden als elektrische Signale über die Busverbindung 8 an die Steuereinrichtung 3 weitergeleitet.

Der Autositz 9 weist eine Kopfstütze 11, eine Rückenlehne 12, eine Sitzfläche 13 und eine bewegbare Fußauflage 25 mit integrierter Unterschenkelauflage 26 auf. In diesen Komponenten des Autositzes 9 sind die Drucksensoren 7 derart verteilt, dass die Körperhaltung einer auf dem Autositz 9 sitzenden Person anhand der Verteilung der erfassten Druckdaten möglichst genau bestimmt werden kann. Dabei sind mehrere Drucksensoren 7 in der Sitzfläche 13 angeordnet, da der Hauptanteil des Gewichts der sitzenden Person auf der Sitzfläche 13 lastet. In der Kopfstütze 11 ist hingegen nur ein Drucksensor 7 angeordnet, da dieser Drucksensor 7 lediglich das Vorhandensein bzw. den Kontakt eines Kopfes der sitzenden Person detektiert. Die Rückenlehne 12 weist wiederum mehrere Drucksensoren 7 auf, um die Körperhaltung der sitzenden Person möglichst genau anhand der Gewichtsverteilung bzw. von Kontaktstellen an der Rückenlehne 12 beurteilen zu können.

Der Mikroprozessor 4 ist weiterhin mit einer Kameraschnittstelle 14 zum Erfassen von Bilddaten verbunden. Mit der Kameraschnittstelle 14 ist eine Kamera 15 über eine Kameradatenleitung 16 verbunden. Die Kameradatenleitung 16 kann dabei als eine Datenleitung für ein analoges Kamerasignal oder als eine digitale Datenleitung ausgebildet sein.

Die Kamera 15 ist dabei derart angeordnet, dass sie die auf dem Autositz 9 sitzende Person erfasst. Insbesondere erfasst die Kamera 15 hierbei einen Kopf, einen Oberkörperbereich, einen Hüftbereich und Oberschenkel dieser sitzenden Person.

Weiterhin ist der Mikroprozessor 4 mit einer Anzeigeeinrichtungsschnittstelle 17 verbunden, über die der Mikroprozessor 4 anzuzeigende Informationen übermitteln kann. Mit der Anzeigeeinrichtungsschnittstelle 17 ist die Anzeigeeinrichtung 2 über eine Anzeigeeinrichtungsdatenleitung 18 verbunden, sodass die Anzeigeeinrichtung 2 die anzuzeigenden Informationen empfangen kann.

Die Anzeigeeinrichtung 2 ist dabei derart angeordnet, dass sie sich im Blickfeld der auf dem Autositz 9 sitzenden Person befindet und von dieser Person gesehen werden kann.

In der Mittelkonsole 10 ist ein berührempfindlicher Bildschirm als Eingabeeinrichtung 19 derart angeordnet, dass er von der sitzenden Person bedient werden kann, so dass Eingaben der sitzenden Person erfasst werden können. Diese Eingaben werden an die Steuereinrichtung 3 weitergegeben. Die Eingabeeinrichtung 19 ist hierzu mit einer Eingabedatenschnittstelle 20 über eine Eingabedatenleitung 21 verbunden, wobei die Eingabedatenschnittstelle 20 mit dem Mikroprozessor 4 verbunden ist.

Eine Anzeigedatenschnittstelle 22 ist mit dem Mikroprozessor 4 verbunden. Über diese Anzeigedatenschnittstelle 22 kann der Mikroprozessor 4 anzuzeigende Informationen empfangen. Eine Anzeigedatenquelle 23, die an der Anzeigeeinrichtung 2 anzuzeigende Informationen bereitstellt, ist über eine Anzeigedatenleitung 24 mit der Anzeigedatenschnittstelle 22 verbunden. Über die Anzeigedatenleitung 24 werden dabei die anzuzeigenden Informationen an die Anzeigedatenschnittstelle 22 übertragen. Die Anzeigedatenquelle 23 ist bspw. eine Komponente bzw. Vorrichtung des Kraftfahrzeugs oder ein Computer im Internet.

Nachfolgend wird die Funktionsweise der Anzeigesteuervorrichtung 1 genauer erläutert.

Nachfolgend wird eine Erstkonfiguration der Anzeigesteuervorrichtung 1 erläutert.

Nachdem sich eine Person auf den Autositz 9 gesetzt hat, löst die Person mittels einer Eingabe an der Eingabeeinrichtung 19, die an die Steuereinrichtung 3 übertragen wird, die Erstkonfiguration zum Erfassen von biometrischen Daten der Person und Erstellen eines Profils bevorzugter Anzeigeparameter aus. Eine solche Erstkonfiguration ist dabei nicht auf ein erstmaliges Platznehmen auf dem Autositz 9 beschränkt, sondern kann von der Person jederzeit über die Eingabeeinrichtung 19 erneut gestartet werden.

Nach Starten der Erstkonfiguration erfassen die Drucksensoren 7 Werte für die auf sie einwirkende Gewichtskraft der Person. Diese Werte werden über die Busverbindung 8 und die Drucksensorenschnittstellen 6 an den Mikroprozessor 4 übertragen. Der Mikroprozessor 4 kombiniert diese Druckwerte bzw. Gewichtswerte miteinander, z. B. indem er sie addiert, so dass ein Gesamtgewicht der Person ermittelt wird.

Weiterhin erfasst die Kamera 15 ein Kamerabild der auf dem Autositz 9 sitzenden Person. Dieses Kamerabild wird in Form von Bilddaten von der Kamera 15 über die Kameradatenleitung 16 und die Kameraschnittstelle 14 an den Mikroprozessor 4 übermittelt. Der Mikroprozessor 4 kann die empfangenen Bilddaten für die Weiterverarbeitung auf der Speichereinrichtung 5 zwischenspeichern.

Der Mikroprozessor 4 führt dann eine Bildanalyse der Bilddaten zum Erfassen biometrischer Daten der Person und zur Bestimmung eines Abstands von Augen der Person zur Anzeigeeinrichtung 2 durch. Bei dieser Bildanalyse extrahiert der Mikroprozessor 4 aus den Bilddaten ein Gesicht der Person und aus diesem extrahierten Gesicht Gesichtsmerkmale, wie z. B. einen Pupillenabstand, eine Gesichtsgeometrie etc., als biometrische Daten. Mittels des extrahierten Gesichts bzw. der extrahierten Gesichtsmerkmale findet die Bestimmung des Abstands der Augen der Person zur Anzeigeeinrichtung 2 statt. Dazu werden die von der Kamera 15 übermittelten Bilddaten dahingehend ausgewertet, dass eine Abschätzung der Entfernung anhand des Größenverhältnisses zwischen dem Gesicht der Person und des Kamerabilds erfolgt. Ein solches Verfahren ist bspw. in der zitierten EP 2 515 526 A2 offenbart.

Der Abstand zur Anzeigeeinrichtung 2 wird dabei von der Körperhaltung, der Position bzw. Einstellung des Autositzes 9 auf dem die Person sitzt und der Position bzw. Anordnung der Anzeigeeinrichtung 2 beeinflusst. Ist die Anzeigeeinrichtung 2 in einer rückwärtigen Seite eines anderen Autositzes (nicht gezeigt) vorgesehen, dann übt dessen Position bzw. Einstellung ebenfalls einen Einfluss auf den Abstand zur Anzeigeeinrichtung 2 aus.

Dann gibt der Mikroprozessor 4 über die Anzeigeeinrichtungsschnittstelle 17 und die Anzeigeeinrichtungsdatenleitung 18 an der Anzeigeeinrichtung 2 eine Information aus, die die Person auffordert, bevorzugte Anzeigeparameter festzulegen.

Für das Erfassen der bevorzugten Anzeigeparameter wird ein Bedienfeld an der Eingabeeinrichtung 19 angezeigt, mit dem Anzeigeparameter eingestellt werden können, z. B. über angezeigte Schieberegler, Tasten oder Eingabefelder.

Die Person bestätigt über das Bedienfeld, dass sie ihre bevorzugten Anzeigeparameter eingeben möchte, woraufhin der Mikroprozessor 4 an der Anzeigeeinrichtung 2 vorbestimmte Symbole und/oder einen vorbestimmten Text als ein Beispiel einer angezeigten Information anzeigt.

Nun verändert die Person mittels der Eingabeeinrichtung 19 die Anzeigeparameter der Anzeigeeinrichtung 2. Dabei ändert der Mikroprozessor 4 nach Maßgabe der Person, die über die Eingabeeinrichtung 19 die Anzeigeparameter einstellt, die Anzeigeparameter für die an der Anzeigeeinrichtung 2 angezeigte Information, so dass die Person eine unmittelbare Rückmeldung geänderter Einstellungen erhält.

Nachdem die Person die bevorzugten Anzeigeparameter eingestellt und diese bestätigt hat, speichert der Mikroprozessor 4 die biometrischen Daten der Person, also das ermittelte Gesamtgewicht und die extrahierten Gesichtsmerkmale, verknüpft mit den bevorzugten Anzeigeparametern und dem korrespondierenden Abstand der Augen zur Anzeigeeinrichtung 2 in der Speichereinrichtung 5.

Somit sind die von der Person bevorzugten Anzeigeparameter zusammen mit deren biometrischen Daten in der Speichereinrichtung 5 hinterlegt, sodass der Mikroprozessor 4 bei einem Wiedererkennen der Person mittels der gespeicherten biometrischen Daten Zugriff auf die zu dieser Person gehörenden bevorzugten Anzeigeparameter hat und diese an der Anzeigeeinrichtung 2 einstellen kann. Der korrespondierende Abstand der Augen zur Anzeigeeinrichtung 2 ist ebenfalls hinterlegt und dient dazu die einzustellenden bevorzugten Anzeigeparameter an einen geänderten Abstand der Augen zur Anzeigeeinrichtung 2 anzupassen bzw. diese für einen geänderten Abstand der Augen zur Anzeigeeinrichtung 2 zu korrigieren.

Nachfolgend wird ein Verfahren zum Steuern einer Anzeigeeinrichtung 2 in einem Kraftfahrzeug erläutert. Dieses Verfahren ist mit der Anzeigesteuervorrichtung 1 ausführbar und entspricht dem Normalbetrieb.

Das Verfahren beginnt im Schritt S1.

Nimmt eine Person auf dem Autositz 9 Platz, übermitteln die Drucksensoren 7 Sensorwerte an den Mikroprozessor 4. Dadurch erkennt der Mikroprozessor die Anwesenheit einer Person auf dem Autositz 9 (Schritt S2). Solange keine Person auf dem Autositz 9 erkannt wird, kann ein (aktives) Warten auf das Setzen einer Person erfolgen.

Dann beginnt die Identifikation der Person (Schritt S3). Dazu werden die Sensorwerte der Drucksensoren 7 sowie das Kamerabild der Kamera 15 vom Mikroprozessor 4 angefordert bzw. empfangen, der wie oben erläutert, daraus biometrische Daten extrahiert und diese mit der in der Speichereinrichtung 5 gespeicherten biometrischen Daten vergleicht.

Wird bei einer solchen Identifikation mittels Vergleichen der biometrischen Daten die Person wiedererkannt, dann greift der Mikroprozessor 4 auf die bevorzugten Anzeigeparameter dieser Person in der Speichereinrichtung 5 zu. Wenn keine Person wiedererkannt wird, dann werden stattdessen vorbestimmte standardisierte Anzeigeparameter, die bspw. zuvor über ein empirisches Verfahren ermittelt worden sind, von der Speichereinrichtung 5 geladen.

Der Identifikationsvorgang ist nicht sicherheitsrelevant bzw. sicherheitskritisch, da es sich lediglich um eine Identifikation einer Person für das Einstellen von Anzeigeparametern handelt. Eine falsche bzw. fehlerhafte Identifikation der Person hat demzufolge keine schwerwiegenden Folgen. Die Identifikation kann daher mittels einfacher Parameter erfolgen, d. h. mit einfachsten Sensoren bzw. Verfahren durchgeführt werden.

Ruft die auf dem Autositz 9 sitzende Person über das an der Eingabeeinrichtung 19 angezeigte Bedienfeld Informationen ab, die an der Anzeigeeinrichtung 2 anzuzeigen sind, bzw. setzt dieses in Betrieb, dann erfasst der Mikroprozessor 4 in einem nächsten Schritt die Körperhaltung der Person, indem er erneut die Sensorwerte der Drucksensoren 7 anfordert, und bestimmt den Abstand der Augen zur Anzeigeeinrichtung 2, wie es oben erläutert ist (Schritt S4). Die angeforderten Druckdaten zusammen beschreiben eine Gewichtsverteilung der auf dem Autositz 9 sitzenden Person. Durch diese Gewichtsverteilung kann mittels einer Auswertung auf die Körperhaltung der Person geschlossen werden, wie es weiter unten erläutert ist.

Zur Auswertung der Körperhaltung empfängt der Mikroprozessor 4 weiterhin das von der Kamera 15 erfasste Kamerabild der auf dem Autositz 9 sitzenden Person, wie es bereits oben erläutert ist.

Der Mikroprozessor 4 führt dann eine Bildanalyse der Bilddaten zum Erfassen der Körperhaltung der Person durch. Bei dieser Bildanalyse extrahiert der Mikroprozessor 4 aus den Bilddaten den Körperumriss der Person, indem er z. B. die Bilddaten auf Kanten und/oder auf Muster untersucht. Somit wird in den Bilddaten die Person detektiert, indem der Körperumriss bestimmt wird.

Dieser Körperumriss wird nun vom Mikroprozessor 4 dahingehend analysiert, dass die Lage einer Wirbelsäule einer Person in etwa festgestellt wird, indem die Lage bzw. Neigung des Körperumrisses in den Bilddaten analysiert wird. Auf einfache Weise kann dabei eine Verschiebung des Oberkörpers in Richtung der Ebene der Rückenlehne 12 und/oder eine Neigung des Oberkörpers quer zur Rückenlehne 12 erkannt werden. Die Neigung der Person zur Rückenlehne 12 hin bzw. von der Rückenlehne 12 weg kann mittels eines Abschätzens von einem Größenverhältnis zwischen Kopf und Oberkörper oder zwischen Kopf und Bild erfolgen, ähnlich wie beim oben erläuterten Bestimmen des Abstands der Augen zur Anzeigeeinrichtung 2, wobei diese Körperteile aus dem Körperumriss bestimmt werden.

Dann folgt eine Auswertung der erfassten Körperhaltung, bei der der Mikroprozessor 4 anhand der ermittelten Gewichtsverteilung und/oder der Analyse des Körperumrisses beurteilt, ob eine eutonische oder eine nicht eutonische Körperhaltung vorliegt (Schritt S5). Bei der Beurteilung mittels der Gewichtsverteilung vergleicht der Mikroprozessor 4 dazu die einzelnen Sensorwerte der Drucksensoren 7 und die ermittelten Neigungswerte des Oberkörpers mit vorbestimmten Schwellwerten.

Die Gewichtsverteilung und/oder Neigungen des Oberkörpers bzw. die entsprechenden Schwellwerte, die eine eutonische Körperhaltung bzw. eine Körperhaltung in einem eutonischen Bereich kennzeichnen, können hierfür zuvor empirisch ermittelt werden.

Als eine eutonische Körperhaltung werden im Rahmen der vorliegenden Erfindung eine vorbestimmte Gewichtsverteilung der Person und/oder eine Körperhaltung mit einer in etwa aufrechten Sitzposition beurteilt. Bei der Gewichtsverteilung ist insbesondere das Gewicht der Person um einen Schwerpunkt der Person in etwa gleichmäßig längs und quer zu einer Fahrtrichtung des Kraftfahrzeugs verteilt.

Die Gewichtsverteilung hängt dabei im Wesentlichen von einer Lage eines Schwerpunkts der Person in Relation zu Auflageflächen ab, über die die Person einen Kontakt zu dem Autositz 9 aufweist. Die Auflageflächen des Autositzes 9 sind dabei typischerweise die Kopfstütze 11, die Rückenlehne 12, die Sitzfläche 13, die Fußauflage 25 und die Unterschenkelauflage 26. Die mit diesen Auflageflächen in Berührung kommenden Körperteile der Person umfassen Kopf, Hals, Nacken, Schultern, Rücken bzw. Oberkörper, Hüfte, Becken, Gesäß, Unterseiten von Oberschenkeln, Unterseiten von Unterschenkeln und Füße. Durch das Gewicht des Oberkörpers ist der Schwerpunkt der Person auf der Sitzfläche 13 in Richtung der Rückenlehne 12 des Autositzes 9 verschoben. Das Gewicht wirkt somit hauptsächlich über das Gesäß auf die Sitzfläche 13. Weitere größere Anteile an der Gewichtsverteilung haben die Oberschenkel, das Becken und die Hüfte, wobei die Oberschenkel auf die Sitzfläche 13 und das Becken und die Hüfte auf die Rückenlehne 12 drücken.

Zusätzlich zur Auflage von Körperteilen auf dem Autositz 9 können weitere Körperteile der Person auf weiteren Auflageflächen aufliegen. Diese weiteren Körperteile umfassen Arme und Hände. Insbesondere können die Arme der Person auf der Armstütze oder der Mittelkonsole 10 aufliegen. Die Füße können auch, statt auf der Fußauflage 25 aufzuliegen, auf einem Fußbodenbereich (nicht gezeigt) des Kraftfahrzeugs aufliegen. Dadurch wird ein Teil des Gewichts der Person auf die weiteren Auflageflächen verteilt.

Um die Gewichtsverteilung möglichst genau ermitteln zu können, ist es daher von Vorteil, in möglichst vielen Auflageflächen, insbesondere der des Autositzes 9, bzw. mit möglichst vielen Drucksensoren 7 das aufliegende Gewicht zu messen.

Auch eine Statur bzw. eine Körperform der Person übt einen Einfluss auf die Gewichtsverteilung aus. Die Statur umfasst dabei eine Körpergröße, einen Körperumfang und ein Körpergewicht. Der Körperumfang, und insbesondere ein Bauchumfang, beeinflusst dabei die Verteilung des Körpergewichts auf der Sitzfläche 13. Bei einem größeren Bauchumfang kann dabei ein größerer Anteil des Körpergewichts zu einer Vorderkante der Sitzfläche 13 hin verteilt sein, während bei geringerem Bauchumfang bzw. bei einer schlankeren Statur ein geringerer Anteil in diese Richtung verteilt ist.

Die Statur und damit die Gewichtsverteilung werden auch vom Geschlecht der Person beeinflusst. Das Geschlecht der Person spielt insofern eine Rolle, als dass oftmals bei einer weiblichen Person eine andere Geometrie des Beckens und des Gesäßes und eine andere Masseverteilung am Körper vorliegen, als bei einer männlichen Person. Weibliche Personen haben oftmals ein breiteres Becken und somit auch ein breiteres Gesäß als männliche Personen. Dadurch ergibt sich eine andere Auflagegeometrie und somit andere Druckpunkte auf der Sitzfläche 13 und der Rückenlehne 12 sowie andere Druckwerte. Daraus resultiert eine andere über die Drucksensoren 7 erfasste Gewichtsverteilung. Demzufolge kann anhand der Gewichtsverteilung der Person, die auf dem Autositz 9 platzgenommen hat, auf das Geschlecht der Person rückgeschlossen werden, sodass diese Geschlechtsbestimmung auch in eine Identifikation der Person anhand der biometrischen Daten mit einfließen kann.

Die Gewichtsverteilung hängt dabei weiterhin von einer Form und insbesondere von einer Neigung der Sitzfläche 13 und der Rückenlehne 12 ab. Weist die Sitzfläche 13 eine größere Neigung hin zur Rückenlehne 12 auf, dann liegt entsprechend mehr Gewicht auf dem an der Rückenlehne 12 angrenzenden Abschnitt der Sitzfläche 13, als bei einer weniger geneigten Sitzfläche 13. Auch wirkt durch eine erhöhte Neigung der Rückenlehne 12 oder der Sitzfläche 13 zur Rückenlehne 12 hin, beim Anlehnen an die Rückenlehne 12, eine zusätzliche Gewichtskraft auf die Rückenlehne 12 ein.

Ebenfalls hängt die Gewichtsverteilung von einer gewählten Stellung der Fußauflage 25 bzw. der Unterschenkelauflage 26 ab. Ist die Fußauflage 25 in etwa senkrecht gestellt, dann wirkt eine größere Gewichtskraft auf die Fußauflage 25 als auf die Unterschenkelauflage 26 ein. Wird die Fußauflage 25 in eine in etwa waagerechte Position bewegt, dann wird eine geringere Gewichtskraft auf die Fußauflage 25 als auf die Unterschenkelauflage 26 ausgeübt.

Zusätzlich hängt die Gewichtsverteilung auch von typischerweise in dem Kraftfahrzeug auftretenden Beschleunigungskräften ab, da durch eine Beschleunigung der Oberkörper der Person bewegt werden kann. Beschleunigungen treten dabei in der Regel kurzfristig und alternierend auf, so dass diese bspw. durch eine wiederholte Ermittlung der Gewichtsverteilung eliminierbar sind. Auch das Einbeziehen von anderen Sensorwerten, wie bspw. eine Bildfolge der Kamera 15, Geschwindigkeitswerte von Geschwindigkeitssensoren, Beschleunigungswerte von Beschleunigungssensoren und/oder Drehraten von Raddrehzahlsensoren, ermöglichen es, Beschleunigungen zu erkennen und diese bei der Ermittlung der Gewichtsverteilung zu eliminieren.

Die eutonische Körperhaltung mit einer in etwa aufrechten Sitzposition ist eine Körperhaltung, bei der die Person mit Kontakt zu der Sitzfläche 13 und zu der Rückenlehne 12 und mit einer in etwa geraden Wirbelsäule sitzt. Der Kontakt zur Sitzfläche 13 und zur Rückenlehne 12 bedeutet dabei, dass die Person entspannt sitzt und das Körpergewicht über mehrere Auflageflächen verteilt ist. Die in etwa gerade Wirbelsäule lässt dabei darauf schließen, dass keine einseitige Gewichtsverteilung längs und quer zur Fahrtrichtung des Kraftfahrzeugs vorliegt.

Insbesondere eine nach vorne gebeugte Körperhaltung, wobei kein Kontakt zur Rückenlehne 12 besteht, lässt darauf schließen, dass die Skelettmuskeln angespannt sind und somit keine eutonische Körperhaltung vorliegt. Auch eine schräge, verdrehte oder zu einer Seite, d. h. quer zum Autositz 9, geneigte Körperhaltung entspricht nicht einer eutonischen Körperhaltung.

Nach der Auswertung der Körperhaltung stellt der Mikroprozessor 4 an der Anzeigeeinrichtung 2 aufgrund der jeweiligen Körperhaltung und des aktuellen Abstands der Augen zur Anzeigeeinrichtung 2 entsprechende Anzeigeparameter ein (Schritt S6).

Ist die Körperhaltung eine eutonische Körperhaltung, dann stellt der Mikroprozessor 4 Anzeigeparameter ein, die der Person ein ermüdungsfreies Ablesen der Anzeigeeinrichtung 2 ermöglichen. Etwaige Abstandsdifferenzen zwischen der aktuellen Konfiguration und einer zuvor bestimmten und hinterlegten Konfiguration werden durch Anpassung der Anzeigeparameter ausgeglichen. Dies ist notwendig, wenn beispielsweise ein Vordersitz in seiner Position nach der zuletzt abgespeicherten Konfiguration der Anzeigeparameter, beispielsweise eines Insassen im Fond, verstellt wurde und somit zwar eine eutonische Körperhaltung eingenommen werden konnte, jedoch sich der Sichtabstand zur Anzeige verändert hat. Dadurch hat die Person keine Veranlassung, die eutonische Körperhaltung zu verlassen bzw. die Körperhaltung zu ändern, um etwa die an der Anzeigeeinrichtung 2 dargestellte Information besser ablesen zu können.

Falls jedoch im Schritt S5 eine nicht eutonische Körperhaltung der Person festgestellt wird, dann werden Anzeigeparameter an der Anzeigeeinrichtung 2 eingestellt, die die Person dazu veranlassen, eine eutonische Körperhaltung einzunehmen.

Nach Ablauf einer vorbestimmten Wartezeit (Schritt S7), die nachfolgend als erste Wartezeit bezeichnet wird, stellt der Mikroprozessor fest, ob der Betrieb fortzusetzen ist (Schritt S8). Ist dies der Fall, dann führt der Mikroprozessor 4 erneut eine Erfassung der Körperhaltung mit anschließender Auswertung der Körperhaltung durch (Schritt S4). Ansonsten endet das Verfahren im Schritt S9.

Nachfolgend werden Alternativen der Anzeigesteuervorrichtung 1 erläutert.

Die Steuereinrichtung 3 kann mit Positionssensoren bzw. -aktoren des Autositzes 9 oder mit anderen Steuereinrichtungen, über die eine Position des Autositzes einstellbar ist, verbunden sein. Dies dient zum Erfassen und/oder zum Einstellen der Position des Autositzes 9, so dass die Position des Autositzes 9 bei einer Verfahrensausführung mit berücksichtigt werden kann und/oder durch die Steuereinrichtung 3 eingestellt werden kann, damit schnell eine eutonische Körperhaltung von der Person einnehmbar ist.

Alternativ kann in der Rückenlehne 12 und/oder der Sitzfläche 13 nur ein Drucksensor 7 angeordnet sein.

Optional kann in der Mittelkonsole 10, der Armauflage, der Kopfstütze 11, der Fußauflage 25 und/oder der Unterschenkelauflage 26 mehr als ein Drucksensor 7 angeordnet sein. In der Kopfstütze 11, der Fußauflage 25 und/oder der Unterschenkelauflage 26 ist das Vorsehen von mehreren Drucksensoren 7 insbesondere dann vorteilhaft, wenn diese Bestandteile eines Liegesitzes sind, da dann die Gewichtsverteilung des Kopfes, der Füße und/oder der Unterschenkel der Person und somit deren Körperhaltung genauer ermittelt werden kann.

Die Mittelkonsole 10, die Armauflage, die Kopfstütze 11, die Fußauflage 25 und/oder die Unterschenkelauflage 26 kann auch ohne darin angeordnete Drucksensoren 7 ausgebildet sein oder weggelassen werden.

Im Fußbodenbereich des Kraftfahrzeugs, bspw. unter oder in einer Fußmatte oder einem Teppichboden oder an einem Innenboden des Kraftfahrzeugs können weitere Drucksensoren 7 angeordnet sein.

Die Drucksensoren 7 können auch einzeln über einzelne Datenleitungen mit der Drucksensorenschnittstelle 6 verbunden sein.

Diese einzelnen Datenleitungen der Drucksensoren 7, die Datenleitungen 16, 18, 21, 24 sowie die Busverbindung 8 können auch als Funkstrecken mit einer drahtlosen Datenübertragung ausgebildet sein.

Zusätzlich können Sensoren, die ein Gewicht und/oder eine Geometrie des Autositzes 9 erfassen, oder Vorrichtungen zur Einstellung der Geometrie des Autositzes 9 mit der Steuereinrichtung 3 verbunden sein. Dadurch können zusätzliche Parameter erfasst werden, die bei der Ermittlung der Gewichtsverteilung mit berücksichtigt werden. Beispielsweise kann aus einem Gesamtgewicht des Autositzes 9 mit der sitzenden Person, da das Nettogewicht des Autositzes 9 bekannt ist, das Gewicht der sitzenden Person für die Identifizierung der Person genau ermittelt werden. Aus den Geometriedaten des Autositzes 9 bzw. den an der Geometrie des Autositzes 9 vorgenommenen Einstellungen können Neigungswinkel von Rückenlehne 12 und Sitzfläche 13 und der Abstand des Autositzes 9 zur Anzeigeeinrichtung 2 ermittelt werden.

Optional können Sensorwerte anderer Sensoren für eine Erfassung bzw. Auswertung der Körperhaltung, eine Abstandsbestimmung, für das Erfassen der biometrischen Daten und/oder das Erfassen der Rückmeldung mittels einer Eingabe verwendet werden. Die Sensoren zur Erfassung der Körperhaltung umfassen dabei neben der Kamera 15 einen Laserscanner, ein Radargerät, ein Ultraschallgerät und/oder ein Mikrowellengerät, wobei diese Sensoren 3D-Daten erzeugen, die vom Mikroprozessor 4 ausgewertet werden. Mittels dieser 3D-Daten kann auch der Abstand der Augen der Person zur Anzeigeeinrichtung 2 bestimmt werden und/oder biometrische Daten der Person erfasst werden, wie z. B. eine Gesichtsgeometrie, eine Ohrengeometrie, eine Körperform, ein Körperumriss und/oder eine Körpergröße. Mit der Kamera 15 und/oder dem Laserscanner lassen sich weiterhin eine Iris und/oder eine Retina der Person erfassen und die Person damit identifizieren. Ein weiterer Sensor zur Identifikation der Person ist ein Mikrofon zum Erkennen einer Stimme oder ein Fingerabdrucksensor zum Erfassen eines Fingerabdrucks.

Zusätzlich kann die als berührempfindlicher Bildschirm ausgebildete Eingabeeinrichtung 19 auch als eine weitere Anzeigeeinrichtung, ähnlich wie die Anzeigeeinrichtung 2, zum Darstellen von anzuzeigenden Informationen dienen. Hierfür ist der berührempfindliche Bildschirm mit der Anzeigeeinrichtungsschnittstelle 17 über eine weitere Anzeigeeinrichtungsdatenleitung (nicht gezeigt) verbunden, wie es bei der Anzeigeeinrichtung 2 mit der Anzeigeeinrichtungsdatenleitung 18 der Fall ist.

Die Eingabeeinrichtung 19 kann auch als eine Tastatur, ein oder mehrere Bedienknöpfe oder als ein Mikrofon für eine Spracheingabe ausgebildet sein. Nachfolgend werden Alternativen der Funktionsweise der Anzeigesteuervorrichtung 1 bzw. des oben beschriebenen Verfahrens erläutert.

Die Erstkonfiguration kann auch weggelassen werden und damit auch die Erfassung der biometrischen Daten. Statt des Abspeicherns der von der Person bevorzugten Anzeigeparameter können dann an der Anzeigeeinrichtung 2 vom Mikroprozessor 4 vorbestimmte Standardwerte eingestellt werden, die vorab empirisch ermittelt wurden.

Das Identifizieren einer Person anhand der biometrischen Daten kann auch automatisch erfolgen, wenn sich eine Person Informationen anzeigen lassen möchte.

Der Mikroprozessor 4 kann die anzuzeigenden Informationen der Anzeigedatenquelle 23 in der Speichereinrichtung 5 zwischenspeichern, bis er diese an der Anzeigeeinrichtung 2 anzeigt.

Alternativ kann der Mikroprozessor 4 auch auf in der Speichereinrichtung 5 zwischengespeicherte Bilddaten zugreifen, die die aktuell von der Person eingenommene Sitzposition wiedergeben und vor sehr kurzer Zeit erfasst wurden. Zur Überprüfung, ob diese Bilddaten neu sind, wird ein Zeitstempel verknüpft mit den Bilddaten gespeichert anhand dessen vom Mikroprozessor 4 das Alter der Bilddaten ermittelt.

Wenn beim Identifikationsversuch im Schritt S3 festgestellt wird, dass die Person nicht identifiziert werden kann, weil keine biometrischen Daten für diese Person vorliegen, dann kann die Erstkonfiguration auch automatisch gestartet werden. In diesem Fall liegt nämlich ebenfalls kein Profil bevorzugter Anzeigeparameter vor.

Grundsätzlich kann die Bestimmung des Abstands der Augen der Person zur Anzeigeeinrichtung 2 bei der Erstkonfiguration und im Schritt S4 auch weggelassen werden. Die im Schritt S6 eingestellten Anzeigeparameter werden dann nicht in Abhängigkeit des Abstands eingestellt. Dadurch wird aber die Einstellung der Anzeigeparameter weniger präzise durchgeführt, da der Abstand der Augen zur Anzeigeeinrichtung 2 nicht berücksichtigt ist.
Das Bestimmen des Abstands der Augen der Person zur Anzeigeeinrichtung 2 und das Erfassen von Gesichtsmerkmalen als biometrische Daten bei der Erstkonfiguration sowie das Bestimmen des Abstands der Augen der Person zur Anzeigeeinrichtung 2 und das Erfassen der Körperhaltung im Normalbetrieb müssen nicht in der oben erläuterten Reihenfolge ausgeführt werden, sondern deren Ausführungsreihenfolge kann auch vertauscht werden.

Bei der Ausführung des Verfahrens bzw. im Normalbetrieb kann das Bestimmen des Abstands der Augen der Person zur Anzeigeeinrichtung 2 statt im Schritt S4 zu erfolgen, auch in einem anderen der Schritte S5 oder S6 erfolgen. Es muss aber vor dem Einstellen der Anzeigeparameter erfolgen, damit der Abstand bei dieser Einstellung mit berücksichtigt werden kann.

Grundsätzlich kann das Bestimmen des Abstands der Augen der Person zur Anzeigeeinrichtung 2 auch auf andere Weise als mit der oben erläuterten Abschätzung mittels eines Vergleichs der Gesichtsgröße und der Bildgröße erfolgen. Weitere Möglichkeiten zur Abstandsbestimmungen sind im oben zitierten Stand der Technik angegeben.

Ist die erste Wartezeit abgelaufen und die erneute Auswertung der Körperhaltung ergibt, dass die Person nach wie vor keine eutonischen Körperhaltung einnimmt, dann kann der Mikroprozessor 4 Anzeigeparameter einstellen, die dieser nichteutonischen Körperhaltung und/oder dem aktuellen Abstand der Augen der Person zur Anzeigeeinrichtung 2 entsprechen, um eine gute Lesbarkeit der angezeigten Information zu ermöglichen. Der Mikroprozessor 4 blockiert dann den Versuch, die Person durch Einstellen von entsprechenden Anzeigeparametern in eine eutonische Körperhaltung zu bringen, entweder dauerhaft oder für eine zweite Wartezeit. Die zweite Wartezeit ist dabei vorzugsweise wesentlich länger gewählt als die oben erläuterte erste Wartezeit, um eine Stresssituation bzw. Ermüdung durch sich ständig ändernde Anzeigeparameter oder durch eine in der aktuellen Sitzposition schlecht lesbare bzw. erfassbare Anzeigeeinrichtung 2 zu vermeiden.

Die angezeigte Information kann eine Auswahl aus der anzuzeigenden Information sein. Durch die Auswahl der angezeigten Informationen aus den potenziell anzuzeigenden Informationen lässt sich die Menge an Informationen, die an der Anzeigeeinrichtung 2 dargestellt werden, verringern. Dadurch wird eine Vergrößerung der jeweiligen angezeigten Informationen für eine gegebene Bildschirmgröße bzw. -auflösung ermöglicht und die Lesbarkeit der Anzeigeeinrichtung 2 erhöht. Die Auswahl kann dabei anhand einer Bestimmung der Relevanz der Information erfolgen.

Ist bspw. eine Webseite darzustellen, die mehrere sogenannte Frames aufweist, die jeweils unterschiedliche darzustellende Informationen enthalten, kann der Frame mit der relevantesten Information bestimmt und nur dieser in einem Browser an der Anzeigeeinrichtung 2 angezeigt werden. Dadurch können Frames mit weniger relevanten Informationen, wie bspw. Werbebanner, Werbeanzeigen etc. weggelassen werden. Somit kann die Anzeigeeinrichtung 2 fast vollständig zum Anzeigen des Frames mit der relevantesten Information genutzt werden.

Das Einstellen der Anzeigeparameter kann bei Vorhandensein zumindest einer weiteren Anzeigeeinrichtung (nicht gezeigt) auch das Verteilen der darzustellenden Information zwischen der Anzeigeeinrichtung 2 und der zumindest einen weiteren Anzeigeeinrichtung nach vorbestimmten Regeln und/oder in Abhängigkeit des Abstands der Augen zu der jeweiligen Anzeigeeinrichtung umfassen, wofür die Abstände zwischen den Augen der Person und jeder der weiteren Anzeigeeinrichtungen bestimmt werden.

Die anzuzeigende Information kann dabei derart verteilt werden, dass unterschiedliche Anteile an Informationen an unterschiedlichen Anzeigeeinrichtungen dargestellt werden. Dieses ermöglicht es, durch eine reduzierte Menge anzuzeigender Information diese an der jeweiligen Anzeigeeinrichtung vergrößert darzustellen, sodass die Lesbarkeit verbessert werden kann.

Die Verteilung der anzuzeigenden Information auf verschiedene Anzeigeeinrichtungen kann dabei in Abhängigkeit eines Informationsgehalts, eines Informationstyps, einer Relevanz der jeweiligen Information, nach einer vorbestimmten Priorität vorhandener Anzeigeeinrichtungen und/oder deren technischen Eigenschaften bzw. technischen Beschränkungen erfolgen und selbsttätig durchgeführt werden. Auch eine Vorgabe von Präferenzen für die Verteilung der Informationen durch die betrachtende Person kann erfolgen. Dadurch kann die anzuzeigende Information mit optimaler Lesbarkeit an den verschiedenen Anzeigeeinrichtungen dargestellt werden. Bspw. kann an einer Anzeigeeinrichtung mit einer hohen Priorität Information mit hoher Relevanz angezeigt werden, während an einer anderen Anzeigeeinrichtung mit einer niedrigen Priorität Information von nur untergeordneter Bedeutung dargestellt wird. Vorzugsweise ist dabei der Anzeigeeinrichtung 2 eine hohe Priorität zugeordnet, während andere Anzeigeeinrichtungen mit niedrigeren Prioritäten versehen sind.

Indem technische Eigenschaften bzw. Beschränkungen der jeweiligen Anzeigeeinrichtung mit berücksichtigt werden, lassen sich bspw. eine dynamisch ändernde Information, wie Bewegtbilder bzw. ein Film, an einer ausreichend schnellen Anzeigeeinrichtung darstellen, während eine relativ statische Information, wie ein Text, an einer eher trägen Anzeigeeinrichtung dargestellt wird.

Durch das Bestimmen der Abstände zur Anzeigeeinrichtung 2 und zu den anderen Anzeigeeinrichtungen kann die Anzeigeeinrichtung, die näher an den Augen der Person angeordnet ist, den relevantesten Anteil an Information anzeigen. Durch die größere Nähe kann eine bzw. mehr Information bei gleichzeitig guter Lesbarkeit bzw. Erkennbarkeit angezeigt werden. Weniger relevante Anteile an Information werden dann an einer oder mehreren der anderen Anzeigeeinrichtungen dargestellt, die sich weiter weg befinden. Bspw. kann beim Betrachten eines Films die am nächsten angeordnete Anzeigeeinrichtung den Film anzeigen, während an einer anderen, weiter entfernten Anzeigeeinrichtung Zusatzinformationen zum Film dargestellt werden. Ein weiteres Beispiel ist das Betrachten einer Webseite, die Frames aufweist, wie es oben erläutert ist. Der Frame mit den relevantesten Informationen wird an der am nächsten angeordneten Anzeigeeinrichtung dargestellt, während an anderen, weiter entfernten Anzeigeeinrichtungen Frames mit weniger relevanten Informationen angezeigt werden. Dadurch kann an der jeweiligen Anzeigeeinrichtung eine gute Lesbarkeit erreicht werden, wobei sämtliche Informationen für die Person gleichzeitig sichtbar sind.

Bei Änderung der Körperhaltung der Person, wobei sich ebenfalls die Abstände ändern, kann die Verteilung der anzuzeigenden Information auf die unterschiedlichen Anzeigeeinrichtungen geändert werden. Lehnt sich die Person bspw. in eine Richtung, bei der ihre Augen einer anderen Anzeigeeinrichtung näher als der Anzeigeeinrichtung mit der relevantesten Information kommen, oder kommt sie der Anzeigeeinrichtung mit der relevantesten Information zu nahe, dann kann die relevanteste Information an der anderen bzw. an einer anderen Anzeigeeinrichtung dargestellt werden. Dies kann anhand eines Unter- bzw. Überschreitens der Abstände von (ggf. vorbestimmten) Schwellenwerten erkannt werden. Um bei geringen Abstandsänderungen ein permanentes Hin- und Herschalten bzw. Verlagern der Information zwischen verschiedenen Anzeigeeinrichtungen zu vermeiden, ist es zweckmäßig die Schwellenwerte derart festzulegen, dass der jeweilige Umschaltvorgang mit einer Hysterese versehen ist.

### Bezugszeichen

- 1: Anzeigesteuervorrichtung
- 2: Anzeigeeinrichtung
- 3: Steuereinrichtung
- 4: Mikroprozessor
- 5: Speichereinrichtung
- 6: Drucksensorenschnittstelle
- 7: Drucksensor
- 8: Busverbindung
- 9: Autositz
- 10: Mittelkonsole
- 11: Kopfstütze
- 12: Rückenlehne
- 13: Sitzfläche
- 14: Kameraschnittstelle
- 15: Kamera
- 16: Kameradatenleitung
- 17: Anzeigeeinrichtungsschnittstelle
- 18: Anzeigeeinrichtungsdatenleitung
- 19: Eingabeeinrichtung
- 20: Eingabedatenschnittstelle
- 21: Eingabedatenleitung
- 22: Anzeigedatenschnittstelle
- 23: Anzeigedatenquelle
- 24: Anzeigedatenleitung
- 25: Fußauflage
- 26: Unterschenkelauflage

## Patentansprüche

1. Verfahren zum Steuern einer Anzeigeeinrichtung in einem Kraftfahrzeug, wobei das Verfahren die Schritte umfasst:
- Erfassen von biometrischen Daten einer Person mittels Sensoren,
- Erstellen eines Profils bevorzugter Anzeigeparameter für diese Person,
- Verknüpftes Speichern der erfassten biometrischen Daten dieser Person und des Profils der bevorzugten Anzeigeparameter, um die Anzeigeeinrichtung (2) gemäß den bevorzugten Anzeigeparametern anzusteuern,
**dadurch gekennzeichnet,**
**dass** überwacht wird, ob die Person eine eutonische Körperhaltung einnimmt, und wenn die Person eine eutonische Körperhaltung einnimmt, dann wird das Profil aktuell eingestellter Anzeigeparameter als bevorzugte Anzeigeparameter verknüpft mit den erfassten biometrischen Daten dieser Person gespeichert.

2. Verfahren nach Anspruch 1,
**dadurch gekennzeichnet, dass**
das Erstellen eines Profils bevorzugter Anzeigeparameter für die Person durch ein Anzeigen unterschiedlicher Anzeigebilder an der Anzeigeeinrichtung (2) und Erfassen einer Rückmeldung einer Person erfolgt.

3. Verfahren nach Anspruch 2,
**dadurch gekennzeichnet, dass**
das Erfassen der Rückmeldung mittels einer Eingabe an einer Eingabeeinrichtung (19) erfolgt, wobei die Eingabeeinrichtung eine Tastatur, ein oder mehrere Bedienknöpfe, einen berührempfindlichen Bildschirm und/oder ein Mikrofon für eine Spracheingabe umfasst, und/oder das Erfassen der Rückmeldung durch das Erfassen einer Körperhaltung der Person mittels Sensoren erfolgt, die entsprechende Sensorwerte erzeugen.

4. Verfahren nach einem der Ansprüche 1 bis 3,
**dadurch gekennzeichnet, dass** wenn bei der Überwachung festgestellt wird, dass die Person eine eutonische Körperhaltung einnimmt, dann wird ein Grad an Eutonie der Körperhaltung ermittelt, und das Profil der eingestellten Anzeigeparameter verknüpft mit den erfassten biometrischen Daten dieser Person wird zusammen mit diesem Grad an Eutonie nur dann gespeichert, wenn der Grad an Eutonie einen zuvor gespeicherten Grad an Eutonie eines anderen Profils von Anzeigeparametern dieser Person übersteigt oder wenn zuvor kein anderes Profil von Anzeigeparametern dieser Person gespeichert wurde.

5. Verfahren nach einem der Ansprüche 1 bis 4,
**dadurch gekennzeichnet, dass**
ein Abstand zwischen Augen der Person und der Anzeigeeinrichtung (2) mittels zumindest eines Sensors bestimmt wird und der Abstand verknüpft mit den biometrischen Daten der Person und des Profils der bevorzugten Anzeigeparameter gespeichert wird.

6. Verfahren zum Steuern einer Anzeigeeinrichtung in einem Kraftfahrzeug, wobei das Verfahren die Schritte umfasst:
- Erfassen einer Körperhaltung einer Person mittels Sensoren, die entsprechende Sensorwerte erzeugen,
- Ermitteln anhand der erfassten Sensorwerte, ob sich die Person in einer eutonischen Körperhaltung befindet,
- Bestimmen eines Abstands zwischen Augen der Person und der Anzeigeeinrichtung (2) mittels zumindest eines Sensors, wenn sich diese Person in einer eutonischen Körperhaltung befindet,
- Einstellen vorbestimmter Anzeigeparameter an der Anzeigeeinrichtung (2) anhand dieses Abstands zwischen den Augen und der Anzeigeeinrichtung (2).

7. Verfahren nach Anspruch 6,
**dadurch gekennzeichnet, dass**
gemäß einem Verfahren nach einem der Ansprüche 1 bis 6 die vorbestimmten Anzeigeparameter anhand des Abstands zwischen den Augen und der Anzeigeeinrichtung (2) und in Kombination mit dem gespeicherten Profil eingestellt werden.

8. Verfahren nach Anspruch 7,
**dadurch gekennzeichnet, dass**
die Sensoren zum Erfassen von biometrischen Daten eine Kamera (15), einen Laserscanner, ein Ultraschallgerät, ein Radargerät und/oder ein Mikrowellengerät zum Erfassen einer Gesichtsgeometrie, einer Ohrengeometrie, einer Körperform, eines Körperumrisses und/oder einer Körpergröße, eine Kamera (15) und/oder einen Laserscanner zum Erfassen einer Iris und/oder einer Retina, ein Mikrofon zum Erkennen einer Stimme, einen Drucksensor (7) zum Erfassen eines Gewichts und/oder einen Fingerabdrucksensor zum Erfassen eines Fingerabdrucks umfassen.

9. Verfahren zum Steuern einer Anzeigeeinrichtung in einem Kraftfahrzeug, die Schritte umfassend:
- Überwachen eines Abstands zwischen Augen einer Person und einer Anzeigeeinrichtung (2) und/oder Überwachen einer Körperhaltung einer Person,
- Anpassen und Einstellen von Anzeigeparametern entsprechend des erfassten Abstands und/oder der erfassten Körperhaltung,
**dadurch gekennzeichnet,**
**dass** überwacht wird, ob die Person eine eutonische Körperhaltung einnimmt, und die geänderten Anzeigeparameter als eingestellte Anzeigeparameter gespeichert werden, falls diese Einnahme einer eutonischen Körperhaltung festgestellt wird.

10. Verfahren nach Anspruch 9,
**dadurch gekennzeichnet, dass**
die eingestellten Anzeigeparameter derart verändert werden, dass die Person dahingehend beeinflusst wird, eine eutonische Körperhaltung einzunehmen.

11. Verfahren nach einem der vorhergehenden Ansprüche,
**dadurch gekennzeichnet, dass**
mittels geeigneter Sensoren eine Gewichtsverteilung und/oder eine Körperhaltung der Person bestimmt wird und anhand dieser Gewichtsverteilung und/oder dieser Körperhaltung beurteilt wird, ob die Person eine eutonische Körperhaltung aufweist.

12. Verfahren nach Anspruch 12,
**dadurch gekennzeichnet, dass**
als eine eutonische Körperhaltung eine vorbestimmte Gewichtsverteilung der Person, wobei insbesondere das Gewicht der Person in etwa gleichmäßig um einen Schwerpunkt der Person längs und quer zu einer Fahrtrichtung des Kraftfahrzeugs verteilt ist, und/oder eine Körperhaltung mit einer in etwa aufrechten Sitzposition beurteilt wird.

13. Vorrichtung zum Steuern einer Anzeigeeinrichtung in einem Kraftfahrzeug, umfassend eine Steuereinrichtung (3), die mit einer Anzeigeeinrichtung (2) und mit Sensoren verbindbar ist, **dadurch gekennzeichnet, dass** die Steuereinrichtung (3) dazu ausgebildet ist, ein oder mehrere Verfahren nach den Ansprüchen 1 bis 12 auszuführen.

## Claims

1. Method for controlling a display device in a motor vehicle, wherein the method comprises the steps of:
- capturing biometric data of a person by means of sensors,
- creating a profile of preferred display parameters for this person,
- storing the captured biometric data of this person and the profile of the preferred display parameters in combination in order to actuate the display device (2) in accordance with the preferred display parameters,
**characterized in that**
monitoring is carried out to determine whether the person adopts a normotonic body posture, and if the person adopts a normotonic body posture then the profile of currently set display parameters is stored as preferred display parameters in combination with the captured biometric data of this person.

2. Method according to Claim 1,
**characterized in that**
a profile of preferred display parameters for the person is created by displaying different display images on the display device (2) and capturing a response of a person.

3. Method according to Claim 2,
**characterized in that**
the response is captured by means of an input on an input device (19), the input device comprising a keypad, one or more control knobs, a touch-sensitive screen and/or a microphone for a voice input, and/or the response is captured by virtue of a body posture of the person being captured by means of sensors that generate applicable sensor values.

4. Method according to one of Claims 1 to 3,
**characterized in that**
if the monitoring establishes that the person adopts a normotonic body posture then a level of normotonia of the body posture is ascertained, and the profile of the set display parameters is stored in combination with the captured biometric data of this person together with this level of normotonia only if the level of normotonia exceeds a previously stored level of normotonia of another profile of display parameters of this person or if no other profile of display parameters of this person has previously been stored.

5. Method according to one of Claims 1 to 4,
**characterized in that**
a distance between eyes of the person and the display device (2) is determined by means of at least one sensor,
and the distance is stored in combination with the biometric data of the person and the profile of the preferred display parameters.

6. Method for controlling a display device in a motor vehicle, wherein the method comprises the steps of:
- capturing a body posture of a person by means of sensors that generate applicable sensor values,
- ascertaining on the basis of the captured sensor values whether the person is in a normotonic body posture,
- determining a distance between eyes of the person and the display device (2) by means of at least one sensor if this person is in a normotonic body posture,
- setting predetermined display parameters on the display device (2) on the basis of this distance between the eyes and the display device (2).

7. Method according to Claim 6,
**characterized in that**
in accordance with a method according to one of Claims 1 to 6 the predetermined display parameters are set on the basis of the distance between the eyes and the display device (2) and in combination with the stored profile.

8. Method according to Claim 7,
**characterized in that**
the sensors for capturing biometric data comprise a camera (15), a laser scanner, an ultrasonic appliance, a radar appliance and/or a microwave appliance for capturing a face geometry, an ear geometry, a body shape, a body contour and/or a body size, a camera (15) and/or a laser scanner for capturing an iris and/or a retina, a microphone for detecting a voice, a pressure sensor (7) for capturing a weight and/or a fingerprint sensor for capturing a fingerprint.

9. Method for controlling a display device in a motor vehicle, comprising the steps of:
- monitoring a distance between eyes of a person and a display device (2) and/or monitoring a body posture of a person,
- adapting and setting display parameters according to the captured distance and/or the captured body posture,
**characterized in that**
monitoring is carried out to determine whether the person adopts a normotonic body posture, and the amended display parameters are stored as set display parameters if this adoption of a normotonic body posture is established.

10. Method according to Claim 9,
**characterized in that**
the set display parameters are altered such that the person is influenced so as to adopt a normotonic body posture.

11. Method according to one of the preceding claims
**characterized in that**
suitable sensors are used to determine a weight distribution and/or a body posture of the person, and this weight distribution and/or this body posture is/are taken as a basis for assessing whether the person has a normotonic body posture.

12. Method according to Claim 12,
**characterized in that**
a predetermined weight distribution of the person, wherein in particular the weight of the person is distributed approximately uniformly around a center of gravity of the person longitudinally and transversely with respect to a direction of travel of the motor vehicle, and/or a body posture with an approximately erect sitting position is/are assessed as a normotonic body posture.

13. Apparatus for controlling a display device in a motor vehicle, comprising a control device (3) that is connectable to a display device (2) and to sensors, **characterized in that** the control device (3) is configured to carry out one or more methods according to Claims 1 to 12.

## Revendications

1. Procédé pour commander un dispositif d'affichage dans un véhicule à moteur, le procédé comprenant les étapes suivantes :
- acquérir des données biométriques d'une personne au moyen de capteurs,
- créer un profil de paramètres d'affichage préférés pour cette personne,
- stocker de manière combinée les données biométriques acquises de cette personne et le profil des paramètres d'affichage préférés afin de commander le dispositif d'affichage (2) selon les paramètres d'affichage préférés, **caractérisé en ce qu'**une surveillance est effectuée pour savoir si la personne adopte une posture eutonique, et lorsque la personne adopte une posture eutonique, le profil de paramètres d'affichage actuellement réglés est alors stocké en tant que paramètres d'affichage préférés de manière combinée avec les données biométriques acquises de cette personne.

2. Procédé selon la revendication 1, **caractérisé en ce que** la création d'un profil de paramètres d'affichage préférés pour la personne est effectuée par affichage de différentes images d'affichage sur le dispositif d'affichage (2) et acquisition d'un retour d'information d'une personne.

3. Procédé selon la revendication 2,
**caractérisé en ce que** l'acquisition du retour d'information est effectuée au moyen d'une saisie sur un dispositif de saisie (19), dans lequel le dispositif de saisie comprend un clavier, un ou plusieurs boutons de commande, un écran tactile et/ou un microphone pour une saisie vocale, et/ou **en ce que** l'acquisition du retour d'information est effectuée par acquisition d'une posture de la personne au moyen de capteurs qui génèrent des valeurs de capteur correspondantes.

4. Procédé selon l'une des revendications 1 à 3,
**caractérisé en ce que** si, au cours de la surveillance, il est déterminé que la personne adopte une posture eutonique, un degré d'eutonie de la posture est alors déterminé, et le profil des paramètres d'affichage réglés de manière combinée avec les données biométriques acquises de cette personne n'est stocké en association avec ce degré d'eutonie que lorsque le degré d'eutonie dépasse un degré d'eutonie précédemment stocké d'un autre profil de paramètres d'affichage de cette personne ou lorsqu'aucun autre profil de paramètres d'affichage de cette personne n'a été précédemment stocké.

5. Procédé selon l'une des revendications 1 à 4,
**caractérisé en ce qu'**une distance entre les yeux de la personne et le dispositif d'affichage (2) est déterminée au moyen d'au moins un capteur et **en ce que** la distance est stockée de manière combinée avec les données biométriques de la personne et du profil des paramètres d'affichage préférés.

6. Procédé pour commander un dispositif d'affichage dans un véhicule à moteur, le procédé comprenant les étapes suivantes :
- acquérir la posture d'une personne au moyen de capteurs qui génèrent des valeurs de capteur correspondantes,
- déterminer, sur la base des valeurs de capteur acquises, si la personne se trouve dans une posture eutonique,
- déterminer une distance entre les yeux de la personne et le dispositif d'affichage (2) au moyen d'au moins un capteur, lorsque cette personne se trouve dans une posture eutonique,
- régler des paramètres d'affichage prédéfinis sur le dispositif d'affichage (2) sur la base de cette distance entre les yeux et le dispositif d'affichage (2).

7. Procédé selon la revendication 6,
**caractérisé en ce que**, conformément à un procédé selon l'une des revendications 1 à 6, les paramètres d'affichage prédéfinis sont réglés sur la base de la distance entre les yeux et le dispositif d'affichage (2) et en combinaison avec le profil stocké.

8. Procédé selon la revendication 7,
**caractérisé en ce que** les capteurs destinés à l'acquisition de données biométriques comprennent une caméra (15), un dispositif de balayage à laser, un appareil à ultrasons, un appareil radar et/ou un appareil à micro-ondes pour l'acquisition d'une géométrie du visage, d'une géométrie des oreilles, d'une forme du corps, d'un contour du corps et/ou d'une taille du corps, une caméra (15) et/ou un dispositif de balayage à laser destiné à l'acquisition d'un iris et/ou d'une rétine, un microphone destiné à la reconnaissance d'une voix, un capteur de pression (7) destiné à l'acquisition d'un poids et/ou un capteur d'empreintes digitales destiné à l'acquisition d'une empreinte digitale.

9. Procédé de commande d'un dispositif d'affichage dans un véhicule à moteur, comprenant les étapes suivantes :
- surveiller la distance entre les yeux d'une personne et un dispositif d'affichage (2) et/ou surveiller la posture d'une personne,
- adapter et régler des paramètres d'affichage en fonction de la distance et/ou de la posture acquise, **caractérisé en ce qu'**une surveillance est effectuée pour savoir si la personne adopte une posture eutonique, et les paramètres d'affichage modifiés sont stockés en tant que paramètres d'affichage réglés dans le cas où il est détecté qu'une posture eutonique est adoptée.

10. Procédé selon la revendication 9,
**caractérisé en ce que** les paramètres d'affichage réglés sont modifiés de manière à inciter la personne à adopter une posture eutonique.

11. Procédé selon l'une des revendications précédentes,
**caractérisé en ce qu'**une répartition du poids et/ou une posture de la personne est déterminée au moyen de capteurs appropriés et **en ce qu'**une évaluation est faite sur la base de cette répartition du poids et/ou de cette posture pour savoir si la personne présente une posture eutonique.

12. Procédé selon la revendication 12,
**caractérisé en ce qu'**il est jugé comme étant une posture eutonique une répartition de poids prédéterminée de la personne, le poids de la personne étant notamment réparti de manière approximativement égale autour d'un centre de gravité de la personne, longitudinalement et transversalement par rapport à une direction de déplacement du véhicule à moteur, et/ou une posture correspondant à une position assise approximativement droite.

13. Dispositif pour commander un dispositif d'affichage dans un véhicule à moteur, comprenant un dispositif de commande (3) qui peut être relié à un dispositif d'affichage (2) et à des capteurs, **caractérisé en ce que** le dispositif de commande (3) est conçu pour mettre en œuvre un ou plusieurs des procédés selon les revendications 1 à 12.
